# EUROPÄISCHE PATENTSCHRIFT

(11) **EP 3 431 702 B1**
(45) Veröffentlichungstag und Bekanntmachung des Hinweises auf die Patenterteilung: **08.04.2020**
(21) Anmeldenummer: 18182616.5
(22) Anmeldetag: 11.12.2017
(51) Int. Cl.: E21B 7/04, E21B 7/20, E21B 7/30, E21B 21/08

(54) **VERFAHREN UND VORRICHTUNG ZUR GRABENLOSEN VERLEGUNG EINES KABELS ODER ROHRES IN EINEM BODEN**
METHOD AND DEVICE FOR TRENCHLESS LAYING OF A CABLE OR PIPE IN THE GROUND
PROCÉDÉ ET DISPOSITIF DE POSE SANS TRANCHÉE D'UN CÂBLE OU D'UN TUYAU DANS UN SOL

(30) Priorität: 09.12.2016 DE 102016014661; 13.03.2017 DE 102017105234
(43) Veröffentlichungstag der Anmeldung: 23.01.2019
(62) Teilanmeldung aus: 17811591.1
(73) Patentinhaber: Beermann Bohrtechnik GmbH, 48477 Hörstel-Riesenbeck (DE); Bohlen & Doyen GmbH, 26639 Wiesmoor (DE)
(72) Erfinder: Dr. Rüdiger Kögler, Rüdiger, 26670 Uplengen (DE)
(74) Vertreter: Eisenführ Speiser

(56) Entgegenhaltungen:
- EP-A1- 2 728 104
- US-A1- 2003 165 360
- US-A1- 2014 305 706

## Beschreibung

Die vorliegende Erfindung betrifft das Gebiet des grabenlosen Verlegens und insbesondere Verfahren und Vorrichtungen zur grabenlosen Verlegung eines Kabels oder Rohres in einem Boden, Verfahren und Vorrichtungen zur parallelen grabenlosen Rohr- und/oder Kabelverlegung in einem Boden und deren Kombination.

In der Vergangenheit wurden zahlreiche Verfahren und Vorrichtungen entwickelt, um Kabel oder Rohre grabenlos im Boden zu verlegen und dadurch sensible Bereiche an der Geländeoberfläche zu unterqueren, für die eine Verlegung im offenen Graben aus beispielsweise technischen, ökologischen, rechtlichen und/oder wirtschaftlichen Gründen nicht möglich oder erwünscht ist.

Außerdem ist die Akzeptanz innerhalb der Bevölkerung für eine offene Verlegung generell stark rückläufig, so dass seitens der Politik und der Netzersteller und -betreiber großes Interesse besteht, auch dort grabenlose Techniken einzusetzen, wo bisher die offene Verlegung vorgesehen war.

Neben wirtschaftlichen Gründen (eine offene Verlegung ist in der Regel kostengünstiger als eine grabenlose Verlegung) liegen bisher beim Einsatz von grabenlosen Techniken auch technische Gründe vor, die gegen die nach dem aktuellen Stand der Technik verfügbaren grabenlosen Verlegeverfahren sprechen.

Den aktuellen Stand der Technik im Hinblick auf die hier vorliegende Erfindung repräsentiert in ganz besonderem Maße die gesteuerte Horizontalbohrtechnik (Horizontal Directional Drilling, HDD), wobei Beispiele hierzu in WO 2006/119797 A1 oder in DE 10 2016 109 830 A1 zu finden sind. Der nächstliegende Stand der Technik ist von US 2003/165360 A1, EP 2 728 104 A1 und US 2014/305706 A1 bekannt.

Beim HDD-Verfahren wird allgemein zunächst eine gesteuerte Pilotbohrung von einem Startpunkt zu einem Zielpunkt aufgefahren. Falls erforderlich, wird diese Pilotbohrung quasi im "Rückwärtsgang" in einem oder mehreren Schritten auf einen so großen Durchmesser aufgeweitet, dass das für die Verlegung vorgesehene Schutzrohr im letzten Arbeitsschritt dann in das (aufgeweitete) Bohrloch eingezogen werden kann. Das Einziehen des Schutzrohrs in die Pilotbohrung erfolgt in der Regel ebenfalls "rückwärts" vom Ziel- zum Startpunkt. In einem separaten Arbeitsschritt erfolgt dann das Einziehen des Kabels in das Schutzrohr.

Mit dem HDD-Verfahren können Bohrungslängen >2.000 m und Bohrlochdurchmesser >1.000 mm erreicht werden. Für die Kabelverlegung - insbesondere von Energiekabeln - sind Bohrungslängen von ca. 1.000 - 1.500 m und Bohrlochdurchmesser von ca. 400 mm (für ein Schutzrohr mit einem Durchmesser von ca. 300 mm) erforderlich. Auch wenn die längen- und durchmesserspezifischen Anforderungen somit von der HDD-Technik erfüllt werden können, gibt es allerdings auch aus technischer Sicht andere Aspekte, die gegen den Einsatz des HDD-Verfahrens für die Kabelverlegung sprechen.

Beim HDD-Verfahren wird die Bohrflüssigkeit zum Abtransport des Bohrkleins und zur Stützung des Bohrlochs eingesetzt. Für den ordnungsgemäßen Einsatz des Verfahrens ist dabei eine bestimmte Mindesttiefe erforderlich. Diese ist dadurch begründet, dass für die Erzeugung und Aufrechterhaltung des Fließvorgangs der Bohrflüssigkeit vom Bohrkopf durch das Bohrloch zum Startpunkt ein bestimmter hydraulischer Druck erforderlich ist. Dieser nötige hydraulische Druck steigt mit der Tiefe der Bohrung und der Länge der Bohrung an. Dieser hydraulische Druck ist am Bohrkopf am größten, da hier die Bohrflüssigkeit aus dem Bohrkopf austritt. Wird dieser hydraulische Druck zu groß, so kann der über dem Bohrloch befindliche Boden diesem Druck nicht mehr standhalten und "reißt" dann auf ("fracing"). Durch diese Risse kann dann die Bohrflüssigkeit unkontrolliert an die Geländeoberfläche fließen, wo sie aufgrund ihrer Konsistenz zu ökologischen und verkehrstechnischen Problemen führen kann. Gleichzeitig wird der im Allgemeinen für einen wirtschaftlichen und sicheren Betrieb erforderliche Bohrflüssigkeitskreislauf unterbrochen. Kabel im Allgemeinen und große Energiekabel im Besonderen werden jedoch bevorzugt in relativ geringen Tiefen zwischen etwa 1,5 m und 4 m verlegt. Bei Energiekabeln gibt es neben den wirtschaftlichen Aspekten auch technische Parameter, die eine solche "flache" Verlegung erforderlich machen.

Besonders ist in diesem Zusammenhang die kritische Wärmeabfuhr zu nennen. Während des Betriebs von Energiekabeln entwickeln diese eine beachtliche Temperatur. Da aber mit steigender Kabeltemperatur die über das Kabel übertragbare Leistung zurückgeht, darf eine bestimmte Maximaltemperatur für einen effizienten und wirtschaftlichen Betrieb nicht überschritten werden. Da die entstehende Temperatur über den Boden an die Umgebungsluft abgegeben werden muss, darf die Bodenüberdeckung nicht zu groß sein, da andernfalls der Boden als "Wärmeisolator" wirkt und dann die oben beschriebenen, negativen Effekte auftreten.

Zusätzlich wird es bei größeren Verlegetiefen auch erforderlich, den seitlichen Abstand zwischen parallel verlaufenden Kabeln zu vergrößern, um die entstehenden Temperaturen sicher abführen zu können. Dies resultiert jedoch in einer wesentlich größeren Trassenbreite zur Verlegung eines aus mehreren (teilweise 12 oder sogar mehr) Einzelkabeln bestehenden Kabelsystems mit entsprechenden negativen Auswirkungen hinsichtlich der Wirtschaftlichkeit der Verlegung. Weiterhin muss die Verlegetiefe mit zunehmendem Abstand der Kabel vergrößert werden. Das elektrische Feld an der Geländeoberfläche ist abhängig vom Abstand und der Verlegetiefe.

Vereinfacht gesagt können mit dem Stand der Technik bei der grabenlosen Kabelverlegung zwar der geforderte Längenbereich bis zu 1.500 m und der erforderliche Durchmesserbereich bis ca. 400 mm abgedeckt werden, jedoch ist es zur Zeit nicht möglich, diese beiden Parameter mit der bevorzugten geringen Tiefenlage eines zu verlegenden Kabels zu kombinieren. Aus diesen Gründen wird die HDD-Technik zur Zeit nur dann eingesetzt, wenn größere Einzelhindernisse wie Flüsse oder Biotope von der Kabeltrasse gekreuzt werden müssen und dabei zwangsläufig größere Bohrungstiefen erforderlich werden. Bei "einfacheren" Topographien wie z.B. intensiv genutzten landwirtschaftlichen Flächen oder versiegelten Flächen (z.B. Parkplätzen) ist die HDD-Technik jedoch aus den genannten Gründen keine Option.

Ein der vorliegenden Erfindung zugrundeliegendes Ziel ist es, die Möglichkeiten zur sinnvollen und wirtschaftlichen grabenlosen Verlegung von Kabeln und/oder Rohren zu erweitern, so dass insbesondere im oberflächennahen Bereich mit einer gewünschten Bohrlänge und einem ausreichenden Durchmesser gearbeitet werden kann.

Es ist dabei insbesondere gewünscht, eine Lösung vorzustellen, die eine grabenlose Verlegung eines Kabels in einem Schutzrohr von 200 - 400 mm (oder auch nur eines entsprechenden Rohrs) in einem Boden in einer Tiefe von etwa 1,5 m bis 4 m und über eine Länge von etwa 1.000 - 1.500 m zu Kosten möglich macht, die vorzugsweise im Bereich der derzeit bekannten Lösungen (wie sie etwa für größere Tiefen eingesetzt werden) liegen.

Die im Folgenden zunächst diskutierten ersten und zweiten Aspekte der Erfindung und dessen/deren Ausgestaltungen sind im Zusammenspiel mit den weiter unten diskutierten dritten bis fünften Aspekten der Erfindung einschließlich der darauffolgenden diskutierten Ausgestaltungen davon zu verstehen, wobei die dritten bis fünften Aspekte auch unabhängig von dem ersten und dem zweiten Aspekt vorteilhafte Anwendung finden können.

Erfindungsgemäß wird nach einem ersten Aspekt ein Verfahren zur grabenlosen Verlegung eines Kabels oder Rohres in einem Boden vorgeschlagen, nämlich mit den Schritten des Erstellens von einer oder mehreren Multifunktionsbohrungen, die sich jeweils von der Oberfläche bis zu einem Schnittpunkt mit einer zur Verlegung des Kabels oder Rohres vorgesehenen Bohrlinie und darüber hinaus erstrecken, und des Durchführens einer gerichteten Horizontalbohrung entlang der Bohrlinie unter Nutzung von unter Druck zugeführter Bohrflüssigkeit, wobei bei einem entsprechenden Bohrfortschritt Bohrflüssigkeit aus dem durch die Horizontalbohrung erstellten Bohrloch durch wenigstens eine der Multifunktionsbohrungen hindurch abgefördert wird.

Erfindungsgemäß wird nach einem zweiten Aspekt ein System zur grabenlosen Verlegung eines Kabels oder Rohres in einem Boden vorgeschlagen, nämlich mit einer Bohrvorrichtung zum Erstellen einer oder mehrerer Multifunktionsbohrungen, die sich jeweils von der Oberfläche bis zu einem Schnittpunkt mit einer zur Verlegung des Kabels oder Rohres vorgesehenen Bohrlinie und darüber hinaus erstrecken, einer Horizontalbohrvorrichtung zum Durchführen einer gerichteten Horizontalbohrung entlang der Bohrlinie unter Nutzung von unter Druck zugeführter Bohrflüssigkeit, einer Fördereinrichtung zum Abfördern von Bohrflüssigkeit aus dem durch die Horizontalbohrung erstellten Bohrloch durch wenigstens eine der Multifunktionsbohrungen hindurch und einer Steuereinheit zur Bestimmung der Position der einen oder mehreren Multifunktionsbohrungen und/oder zur Steuerung der Fördereinrichtung.

Ein Teil des Hintergrunds des ersten und zweiten Aspekts der vorliegenden Erfindung findet sich in den folgenden Überlegungen.

Es wurde im Rahmen der Erfindung realisiert, dass sich mit der Nutzung der Multifunktionsbohrungen eine wesentliche Weiterentwicklung der Möglichkeiten gegenüber dem bekannten Stand der Technik erreichen lässt.

Die Multifunktionsbohrungen erlauben es, den Druck der Bohrflüssigkeit am Bohrkopf soweit zu reduzieren, dass die Stabilität des darüberliegenden und umgebenden Bodens nicht überschritten wird. Bei einer vergleichsweise kurzen Bohrung würde ein relativ geringer Druck der Bohrflüssigkeit ausreichen, um den Druckabfall entlang der Bohrstrecke zu adressieren, während eine Verlängerung der Bohrstrecke herkömmlich mit einer dann notwendigen Erhöhung des Drucks einhergeht. Durch die Multifunktionsbohrungen wird dieser Zusammenhang durchbrochen, so dass auch bei einer langen Bohrstrecke kein zu hoher Druck nötig wird.

Werden die Multifunktionsbohrungen bis knapp unterhalb der geplanten Bohrlinie erstellt, kann der bei der Erstellung der Multifunktionsbohrungen entnommene Boden oberhalb und auf Höhe der späteren Horizontalbohrung genau analysiert werden und gleichzeitig kann auch die exakte Höhenlage des Grundwasserspiegels festgestellt werden. Basierend auf diesen Analysen ist es möglich, die für die Erstellung der Horizontalbohrung einzusetzenden Komponenten (Bohrkopf, Bohrgestänge, Bohrflüssigkeit) optimal auszuwählen und dadurch das Ausführungsrisiko zu minimieren und die Wirtschaftlichkeit zu maximieren.

Indem die Ansatzpunkte der Multifunktionsbohrungen vor Beginn der Horizontalbohrung genau eingemessen und mit ihren jeweiligen Koordinaten und Höhenwerten dokumentiert werden, können diese Zwischenpositionen entlang der Bohrlinie als exakte Referenzpunkte für den steuerbaren Bohrkopf während der späteren Erstellung der Horizontalbohrung genutzt werden. Dadurch werden sehr hohe Lagegenauigkeiten ermöglicht, was zu einer Minimierung der Abstände zwischen den Horizontalbohrungen führt, da die notwendigerweise zuzustehenden Abweichungstoleranzen entsprechend kleiner ausfallen können.

Die genaue Kenntnis des Bodenaufbaus und des Grundwasserstands ermöglicht es außerdem, die maximal in der Horizontalbohrung zulässigen hydraulischen Drücke vorauszuberechnen und mit diesen Werten den späteren Einsatz der Pumpen zu optimieren. Dadurch lassen sich Austritte der Bohrflüssigkeit an der Geländeoberfläche sicherer verhindern und die Abstände der Multifunktionsbohrungen optimieren.

Durch die mögliche Nutzung der Multifunktionsbohrung für die Zuführung frischer, mit optimalen rheologischen Eigenschaften versehenen Bohrflüssigkeit in den Ringraum zwischen Horizontalbohrung und Bohrgestänge bzw. Schutzrohr können die Bohrlochstabilität maximiert und die Reibungswerte minimiert werden. Beides trägt wiederum zur Minimierung des Baurisikos und zur Maximierung der Wirtschaftlichkeit bei.

Die vorliegende Erfindung ermöglicht somit nicht nur bestehende Verfahren für die grabenlose Kabelverlegung zu optimieren, sondern völlig neue Anwendungsdimensionen zu erschließen und damit einen wesentlichen Beitrag zur umweltverträglichen, aus technischer Sicht effizienten und darüber hinaus wirtschaftlichen Realisierung von Kabeltrassen zu leisten.

In einer vorteilhaften Ausgestaltung eines Aspekts der Erfindung ist ein Einziehen des Rohres oder Kabels in das erstellte Bohrloch, insbesondere unter Abfördern von zurückfließender oder verdrängter Bohrflüssigkeit aus dem Bohrloch durch wenigstens eine der Multifunktionsbohrungen hindurch vorgesehen, wobei insbesondere ein zur Aufnahme eines Kabels vorgesehenes Rohr eingezogen wird und das Verfahren hierbei ferner ein Einziehen des Kabels in das Rohr umfasst.

Auch beim Einziehen des Rohres oder Kabels in das mit Bohrflüssigkeit versehene Bohrloch kann sich ein Druck aufbauen, der nachteilige Wirkungen auf den umgebenden Boden haben kann, wobei eine Abförderung von Bohrflüssigkeit entsprechend dem Fortschritt des Einziehens hierbei hilfreich ist. Ein Druckaufbau in der Bohrflüssigkeit stellt zudem eine Erschwernis des Einziehens selbst dar, die ebenfalls mit dem Abfördern vermindert werden kann.

In einer weiteren vorteilhaften Ausgestaltung eines Aspekts der Erfindung ist ein Einbringen von Bindemittel durch wenigstens eine der Multifunktionsbohrungen zum Verankern des verlegten Rohres oder Kabels im Boden vorgesehen.

In einer bevorzugten Variante der obigen Ausgestaltung wird während des Einbringens von Bindemittel durch die Multifunktionsbohrung Bohrflüssigkeit durch eine andere Multifunktionsbohrung hindurch und/oder durch ein Ende oder einen Anfang der Horizontalbohrung abgefördert.

Die spezifischen Gewichte von Energiekabeln liegen bei etwa 40 kg/m. Damit wiegt ein 1.500 m langes Kabel etwa 60 t. Beim Einzug eines solchen schweren Kabels in ein Schutzrohr kann die Reibungskraft zwischen Kabel und Schutzrohr so groß werden, dass mit dem Kabeleinzug auch das Schutzrohr bewegt wird. In diesem Fall schiebt das Kabel während des Einziehvorgangs das Schutzrohr praktisch wieder aus der Horizontalbohrung heraus. In einem solchen Fall muss der Einziehvorgang abgebrochen werden und das Kabel muss wieder nach hinten aus der Horizontalbohrung herausgezogen werden. Dabei kann es leicht zu Beschädigungen der äußeren Schutzschicht des Kabels kommen. Außerdem muss dann das Schutzrohr komplett aus der Horizontalbohrung geborgen und neu eingezogen werden. Die entsprechenden zeitlichen und wirtschaftlichen Nachteile sind offensichtlich.

Aus diesen Gründen ist eine gute Verankerung des Schutzrohrs im Boden von Vorteil und eine einfache Bettung in Bohrflüssigkeit (wie heutzutage beim HDD-Verfahren üblich) ist im Allgemeinen nicht tauglich, da eine der wichtigsten rheologischen Aufgaben von Bohrflüssigkeit darin besteht, eine möglichst geringe Reibung in der Horizontalbohrung zu ermöglichen was offensichtlich eine konträre Aufgabenstellung zur gewünschten Verankerung darstellt.

Das für diese Ausgestaltung der Erfindung vorgesehene, durch die Multifunktionsbohrungen zugeführte Bindemittel kann so konditioniert werden, dass sowohl die Haltekräfte nach Abbinden als auch der thermische Widerstand auf die spezifischen Anforderungen der Kabelverlegung abgestimmt werden. Dadurch können erheblich bessere Bedingungen sowohl beim Einziehen des Kabels in das Schutzrohr als auch beim Betrieb des Kabels erreicht werden, als wenn das Schutzrohr in der für den Bohrvorgang benutzten Bohrflüssigkeit eingebettet bleibt (wie nach dem Stand der Technik bisher üblich).

Ein weiterer wichtiger Vorteil einer effizienten Verankerung des Schutzrohrs im Boden besteht darin, dass der Durchmesser des Schutzrohrs kleiner gewählt werden kann als heutzutage nach dem Stand der Technik üblich. Dies ist darin begründet, dass ein kleineres Schutzrohr in der Regel zu größeren Reibungskräften beim Einziehen des Kabels führt und dadurch die oben beschrieben Probleme entstehen können (was bisher durch entsprechend große Schutzrohre teil-kompensiert wurde). Durch die feste Verankerung im Boden sind diese Reibungskräfte unproblematisch. Dadurch können sowohl der Durchmesser des Schutzrohrs als auch der Durchmesser der Horizontalbohrung kleiner ausgeführt werden.

Beide Aspekte (kleines Schutzrohr, kleinere Horizontalbohrung) führen zu erheblichen wirtschaftlichen Vorteilen durch die geringeren Kosten für das Schutzrohr und die schnellere und einfachere Durchführung einer kleineren Horizontalbohrung (z.B. wegen des Wegfalls eines separaten Räumgangs). Zusätzlich ergeben sich dadurch positive ökologische Effekte, da erheblich weniger Boden aus der Horizontalbohrung entsorgt werden muss. Kann der Durchmesser der Horizontalbohrung z.B. von 500 mm auf 350 mm reduziert werden, so reduziert sich die Masse an zu entsorgendem Boden um mehr als die Hälfte.

In einer weiteren vorteilhaften Ausgestaltung eines Aspekts der Erfindung ist ein Aufweiten des Bohrlochs der Horizontalbohrung vor oder bei einem Einbringen des Kabels oder Rohres vorgesehen.

Die Aufweitung des Bohrlochs ist eine optionale Ausgestaltung, wobei im Einzelfall der Aufwand für ein größeres Bohrloch gegen den Aufwand für eine nachträgliche Aufweitung abzuwägen ist.

In einer weiteren vorteilhaften Ausgestaltung eines Aspekts der Erfindung ist ein Messen eines hydraulischen Drucks im Bohrloch der Horizontalbohrung vorgesehen, wobei die Messergebnisse insbesondere für eine Steuerung einer Abförderung von Bohrflüssigkeit durch eine der Multifunktionsbohrungen genutzt werden, und/oder die Messergebnisse, in einem Fall, dass mehrere Multifunktionsbohrungen erstellt werden, insbesondere für eine Bestimmung einer Entfernung der nächsten zu erstellenden Multifunktionsbohrung von der zuletzt erstellten Multifunktionsbohrung entlang der Bohrlinie genutzt werden.

Mit Kenntnis der jeweiligen Druckverhältnisse, insbesondere am Bohrkopf selbst, können entsprechende Maßnahmen ergriffen werden, um etwa ein gewünschtes Durchniveau im Bohrloch nicht zu überschreiten. Dies kann einerseits den Bohrvorgang und die Abförderung von Bohrflüssigkeit selbst betreffen, aber anderseits auch durch entsprechende Positionierung der weiteren Multifunktionsbohrungen während des Bohrvorschritts geschehen.

In einer weiteren vorteilhaften Ausgestaltung eines Aspekts der Erfindung ist ein Verfahren zur grabenlosen Verlegung eines Kabels im Boden mit den folgenden Schritten vorgesehen: Erstellen von vertikal ausgerichteten Multifunktionsbohrungen in einem vorgegebenen Abstand zueinander von einer Geländeoberfläche bis unterhalb einer vorgegebenen Bohrlinie, wobei die Bohrlinie zwischen einem Startpunkt und einem Zielpunkt durch den Boden verläuft, Aufbauen mindestens einer Pumpe und mindestens eines Vertikalrohrs an mindestens einer der Multifunktionsbohrungen, Aufbauen mindestens einer Rückleitung vom Startpunkt bis zum Zielpunkt und Verbinden der Rückleitung mit mindestens einer Pumpe, Erstellen einer Horizontalbohrung in dem Boden mittels eines steuerbaren Bohrkopfs und eines Bohrgestänges entlang der vorgegebenen Bohrlinie, wobei die für den Erstellvorgang verwendete Bohrflüssigkeit vom Startpunkt durch das Bohrgestänge dem steuerbaren Bohrkopf zugeführt wird und außerhalb des Bohrgestänges durch die Horizontalbohrung zurückfließt, wobei die zurückfließende Bohrflüssigkeit von der mindestens einen Pumpe über mindestens ein Vertikalrohr in mindestens einer der Multifunktionsbohrungen aus der Horizontalbohrung abgepumpt und durch die mindestens eine Rückleitung zum Startpunkt gefördert wird, Demontage des Bohrkopfs vom Bohrgestänge nach Ankunft des Bohrkopfs am Zielpunkt und Verbinden des Bohrgestänges über einen Ziehkopf mit einem Schutzohr, Zurückziehen des Bohrgestänges zum Startpunk und dabei gleichzeitiges Einziehen des Schutzrohres in die Horizontalbohrung, wobei die zurückfließende und/oder vom Schutzrohr verdrängte Bohrflüssigkeit von der mindestens einen Pumpe über mindestens ein Vertikalrohr in mindestens einer der Multifunktionsbohrungen aus der Horizontalbohrung abgepumpt und durch die mindestens eine Rückleitung zum Startpunkt gefördert wird, Verankern des Schutzrohres im Boden durch Verpressen von Bindemittel in die Horizontalbohrung durch mindestens eine Bindemittelpumpe und mindestens ein Vertikalrohr in mindestens einer Multifunktionsbohrung, wobei die vom Bindemittel verdrängte Bohrflüssigkeit von der mindestens einen Pumpe über mindestens ein Vertikalrohr in mindestens einer der Multifunktionsbohrungen aus der Horizontalbohrung abgepumpt und durch die mindestens eine Rückleitung zum Startpunkt gefördert wird, Rückbauen der Multifunktionsbohrungen, der mindestens einen Pumpe, der mindestens einen Rückleitung und Einbringen eines Zugmittels in das Schutzrohr, Einziehen des Kabels in das Schutzrohr mittels des Zugmittels.

In einer weiteren vorteilhaften Ausgestaltung eines Aspekts der Erfindung ist eine Vorrichtung zur grabenlosen Verlegung eines Kabels im Boden vorgesehen, mit Mitteln für insbesondere vertikal ausgerichtete Multifunktionsbohrungen in einem vorgegebenen Abstand zueinander von einer Geländeoberfläche bis unterhalb einer vorgegebenen Bohrlinie, wobei die Bohrlinie zwischen einem Startpunkt und einem Zielpunkt durch den Boden verläuft, mindestens einer Pumpe, mindestens einer Rückleitung vom Startpunkt bis zum Zielpunkt, Mitteln für eine Horizontalbohrung entlang der vorgegebenen Bohrlinie, einem steuerbaren Bohrkopf, einem Bohrgestänge, einer Bohrflüssigkeit, einem Schutzohr, einem Räumer, einer Zuleitung, einem Ziehkopf, einem Zugmittel und einem Bindemittel.

Zusammengefasst werden zur grabenlosen Verlegung eines Kabels oder eines Rohres in einem Boden ein Verfahren und dabei einsetzbare Vorrichtungen vorgeschlagen, wobei insbesondre das Verfahren eine Erstellung vertikaler Multifunktionsbohrungen entlang einer Bohrlinie im Boden vorsieht, über welche bei der anschließenden Durchführung einer gesteuerten Horizontalbohrung die eingesetzte Bohrflüssigkeit abgeführt und nach Einzug eines Schutzrohres in die Horizontalbohrung Bindemittel zum Verankern des Schutzrohrs im Boden zugeführt wird, gefolgt von einem Einziehen des Kabels in das im Boden verankerte Schutzrohr.

Im Rahmen der vorliegenden Erfindung werden zur grabenlosen Verlegung eines Kabels oder Rohres im Boden unter anderem ein Bohrkopf und ein Bohrgestänge vorgesehen, wobei das Bohrgestänge einem, insbesondere etwa 250 m langen, vorderen Abschnitt (direkt) hinter dem Bohrkopf und einem daran anschließenden, vorzugsweise bis zum Startpunkt reichenden hinteren Abschnitt aufweist, wobei der Bohrkopf einen Durchmesser von vorzugsweise 300-500 mm und der erste, vordere Abschnitt des Bohrgestänges einen Durchmesser von vorzugsweise 100-150 mm und der zweite, hintere Abschnitt des Bohrgestänges einen Durchmesser von vorzugsweise 150-200 mm aufweisen.

Im Rahmen der vorliegenden Erfindung wird zur grabenlosen Verlegung eines Kabels im Boden ein aus einzelnen Rohrelementen gefertigtes Schutzrohr vorgesehen, wobei die Verbindung der einzelnen Rohrelemente des Schutzrohrs durch Schrauben und/oder Kleben und/oder Klammern und/oder Schweißen geschieht und die Verbindung eine ähnlich hohe Zugkraft übertragen kann wie die einzelnen Rohrelemente selbst und die Verbindung bis etwa 3 bar druckdicht ist und im Inneren der Verbindung keine Wülste entstehen.

Im Rahmen der vorliegenden Erfindung wird zur grabenlosen Verlegung eines Kabels oder Rohres im Boden ein Bindemittel mit einem thermischen Widerstand von < 1,2 Km/W und einer einaxialen Druckfestigkeit > 1 N/mm² vorgesehen.

Insbesondere im Bereich des Verlegens von Energiekabeln, aber auch in anderen Zusammenhängen, ist es von Interesse mehrere Kabel oder Rohre mit einem parallelen Verlauf zu verlegen.

Bei einer nachfolgenden Bohrung, die nahe am Verlauf einer vorherigen Bohrung verläuft, kann es unter Umständen zu einer unerwünschten Wechselwirkung mit der vorherigen Bohrung kommen, da durch die vorherige Bohrung der Boden bereits gestört und damit geschwächt ist. Insbesondere wenn hohe Bohrflüssigkeitsdrücke auftreten, kann es zu einem Durchbruch der Bohrflüssigkeit durch den Boden zur benachbarten Bohrung kommen, wobei dann ein wesentlicher Verlust an Bohrflüssigkeit zur einen unkontrollierten Abfluss auftreten kann.

Werden mehrere Bohrungen nacheinander vorgenommen, ist damit ein entsprechender Zeitaufwand verbunden, da für jede Bohrung im Wesentlichen dieselben Schritte wiederholt werden. Werden, bei entsprechend höheren Geräteaufwand die Bohrungen parallel vorgenommen, besteht eine Problematik darin, dass durch den räumlichen Aufwand der Geräte die gleichzeitigen Bohrungen einen gewissen Mindestabstand aufweisen müssen.

Selbst wenn dies dadurch adressiert wird, dass parallel verlaufende Bohrungen aus einander entgegengesetzten Richtungen vorgenommen werden, besteht noch immer eine Problematik darin, dass die Bohrverläufe auch parallel sein sollen.

Insbesondere im Bereich von Energiekabeln ist ein Abstand in einem Bereich von einem Mindestabstand bis zu einem Maximalabstand einzuhalten, vorzugsweise in Form eines definierten oder vorgegebenen Abstands, wobei es angesichts der mit einer breiteren Trasse verbundenen Konsequenzen wünschenswert ist, den tatsächlichen Abstand möglichst nahe an dem definierten oder vorgegebenen Abstand zu halten.

Eine Möglichkeit, mit recht hoher Genauigkeit eine parallele Verlegung von Kabeln zu erreichen, besteht darin, dass ein Schutzrohr von ausreichender Größe vorgesehen ist, in das die Kabel in dem gewünschten Abstand eingezogen werden können. Ein derartiges Schutzrohr hat dann allerdings einen Durchmesser, der sich im Wesentlichen aus dem gewünschten Abstand ergibt, wobei der Bohraufwand - sofern angesichts der Bodenverhältnisse und/oder der gewünschten Verlegetiefe überhaupt machbar - entsprechend erhöht.

Ein der vorliegenden Erfindung zugrundeliegendes Ziel ist es, eine effiziente und vielseitige Verlegemöglichkeit zum parallelen Verlegen von Kabeln und/oder Rohren vorzusehen, die die oben beschriebenen Probleme vermeidet oder zumindest verringert.

Es ist daher gewünscht, eine Lösung vorzustellen, die mit geringem apparativem und räumlichem Aufwand erlaubt, Kabel und/oder Rohr mit einem parallelen Verlauf in der Nähe zueinander zu verlegen.

Erfindungsgemäß wird nach einem dritten Aspekt der vorliegenden Erfindung ein Ziehkopf zur parallelen grabenlosen Rohr- und/oder Kabelverlegung in einem Boden vorgeschlagen, wie er in Anspruch 1 definiert ist, nämlich mit einem vorderen Anschlusselement zur Kopplung des Ziehkopfs mit einer Zugeinrichtung in einem Pilotbohrloch oder mit einer Bohreinrichtung für ein Pilotbohrloch und wenigstens zwei hinteren Anschlusselementen zur jeweiligen Kopplung des Ziehkopfs mit einem zu verlegenden Rohr oder Kabel, wobei wenigstens eines der hinteren Anschlusselemente gegenüber dem vorderen Anschlusselement parallel quer zu einer Zugrichtung versetzt angeordnet ist, wobei der Ziehkopf zwischen wenigstens einem hinteren Anschlusselement und dem vorderen Anschlusselement einen Durchtrittsbereich aufweist, der für beim Verlegen aus einem Bereich neben dem Pilotbohrloch zwischen die hinteren Anschlusselemente versetztes Bodenmaterial durchlässig ist.

Erfindungsgemäß wird nach einem vierten Aspekt ein Verfahren zur parallelen grabenlosen Rohr- und/oder Kabelverlegung in einem Boden vorgeschlagen, wie es in Anspruch 12 definiert ist, nämlich mit den Schritten eines Erstellens eines Pilotbohrlochs im Boden, eines Koppelns eines Ziehkopfes mit einer sich durch das Pilotbohrloch erstreckenden Zugeinrichtung, eines Koppelns des Ziehkopfes mit den zu verlegenden Rohren und/oder Kabeln und eines Ziehens des Ziehkopfes mit daran angekoppelten Rohren und/oder Kabeln durch das Pilotbohrloch mittels der Zugeinrichtung, wobei beim Ziehen des Ziehkopfes durch den Ziehkopf und/oder die angekoppelten Rohre und/oder Kabel neben dem Pilotbohrloch befindliches Bodenmaterial durch einen Durchtrittsbereich des Ziehkopfes hindurch in einen Bereich zwischen den angekoppelten Rohren und/oder Kabeln versetzt wird.

Erfindungsgemäß wird nach einem fünften Aspekt ein Verfahren zur parallelen grabenlosen Rohr- und/oder Kabelverlegung in einem Boden vorgeschlagen, wie es in Anspruch 14 definiert ist, nämlich mit den Schritten eines Koppelns eines Ziehkopfes mit einer Bohreinrichtung zur Erstellung eines Pilotbohrlochs im Boden, eines Koppelns des Ziehkopfes mit den zu verlegenden Rohren und/oder Kabeln und Vortreiben des Ziehkopfes mit daran angekoppelten Rohren und/oder Kabeln durch das Pilotbohrloch mittels der Bohreinrichtung beim Bohren des Pilotbohrlochs, wobei beim Vortreiben des Ziehkopfes durch den Ziehkopf und/oder die angekoppelten Rohre und/oder Kabel neben dem Pilotbohrloch befindliches Bodenmaterial durch einen Durchtrittsbereich des Ziehkopfes hindurch in einen Bereich zwischen den angekoppelten Rohren und/oder Kabeln versetzt wird.

Dem dritten, vierten und fünften Aspekt der Erfindung liegt die Erkenntnis zu Grunde, dass es durch geeignete Maßnahmen möglich ist, ein (einzelnes) Pilotbohrloch in mehrere "Nutzbohrlöcher" umzuformen, wenn hier Bodenmaterial so umgelagert wird, dass es aus dem Bereich der "Nutzbohrlöcher" in den Bereich des ursprünglichen Pilotbohrlochs "verschoben" wird.

Hierbei ist es einerseits möglich, ein bereits erstelltes Pilotbohrloch im Rahmen eines Zugverfahrens zu nutzen, während es andererseits auch vorgesehen sein kann, zugleich bei der Erstellung des Pilotbohrlochs auch die parallele Verlegung vorzusehen.

In einer vorteilhaften Ausgestaltung eines Aspekts der Erfindung ist das vordere Anschlusselement für ein Aufweiten des Pilotbohrlochs ausgestaltet.

Wenn es die Bodenbeschaffenheit erlaubt, ein entsprechendes Aufweiten vorzunehmen, kann durch dieses Aufweiten beim Einziehen der parallel zu verlegenden Kabel bzw. Rohre entsprechender Aufwand beim Erstellen des Pilotbohrlochs eingespart werden.

In einer anderen vorteilhaften Ausgestaltung eines Aspekts der Erfindung ist der Ziehkopf für eine Anpassung eines Abstands zwischen den hinteren Anschlusselementen ausgestaltet, insbesondere für eine Anpassung während der Verlegung.

Wie bereits oben erläutert ist es insbesondere beim Verlegen von Energiekabeln vorgesehen bzw. vorgeschrieben, dass diese einen Abstand voneinander aufweisen, der mit der Tiefe zunimmt. Wenn der Ziehkopf allgemein für eine Anpassung des Abstands der hinteren Anschlusselement ausgestaltet ist, kann dieser Ziehkopf für eine Verlegung in unterschiedlichen Tiefen genutzt werden, ohne dass für jede Tiefe ein gesonderter Ziehkopf nötig wäre. Wenn der Ziehkopf darüber hinaus auch eine Anpassung des Abstands während der Verlegung erlaubt, kann das Pilotbohrloch (und damit die Verlegetiefe) im Abstand zur Oberfläche variieren, ohne dass dies die Zulässigkeit der Verlegung in Frage stellen würde.

In einer anderen vorteilhaften Ausgestaltung eines Aspekts der Erfindung weist der Ziehkopf wenigstens ein Löse- und/oder Führungselement auf, das für ein Lösen von zu verdrängendem Bodenmaterial und/oder ein Führen von Bodenmaterial beim Verdrängen ausgestaltet ist.

Mit einem derartigen Löse- und/oder Führungselement wird unterstützend zur Wirkung der Anordnung der Anschlusselement Einfluss auf das Versetzen des Bodenmaterials genommen.

In einer anderen vorteilhaften Ausgestaltung eines Aspekts der Erfindung weist der Ziehkopf ein Förderelement zum Fördern von Bodenmaterial durch den Durchtrittsbereich auf, wobei das Förderelement insbesondere eine Förderschnecke umfasst.

Eine aktive Förderung von Bodenmaterial durch den Bereich des Ziehkopfes unterstützt einerseits ebenfalls den Versatz von Bodenmaterial, wobei mit der Förderung zudem die Möglichkeit verbunden ist, in besonderer Weise eine Verdichtung des versetzten Bodenmaterials zu erreichen.

In einer anderen vorteilhaften Ausgestaltung eines Aspekts der Erfindung ist das vordere Anschlusselement mit einem der hinteren Anschlusselemente über ein oder mehrere Verbindungselemente verbunden, wobei sich das Verbindungselement oder die Verbindungselemente in, neben, unter und/oder über dem Durchtrittsbereich erstrecken.

Es ist möglich, den Ziehkopf so auszugestalten, dass eines der hinteren Anschlusselemente in der Flucht des vorderen Anschlusselements liegt, wobei dann nur ein oder mehrere Verbindungselemente zu dem anderen hinteren Anschlusselement nötig sind, die in spezieller Weise zum Durchtrittsbereich angeordnet sind. Es ist allerdings auch möglich, dass beide hintere Anschlusselemente gegenüber dem vorderen Anschlusselement versetzt angeordnet sind.

In einer anderen vorteilhaften Ausgestaltung eines Aspekts der Erfindung weist der Ziehkopf ein weiteres hinteres Anschlusselement zu einer derartigen Kopplung mit einem zu verlegenden Rohr oder Kabel auf, dass das Rohr oder Kabel innerhalb eines durch das Pilotbohrloch definierten Bereichs zu liegen kommt, insbesondere koaxial zu einer Mittelachse des Pilotbohrlochs.

Die Erfindung erlaubt hierbei eine breite Wahlmöglichkeit hinsichtlich des Verhältnisses des Durchmessers des insbesondre koaxial zur Mittelachse des Pilotbohrlochs verlegten Rohr oder Kabel zu den anderen Rohren und/oder Kabeln, wobei in jedem Fall keine Beschränkung hinsichtlich der relativen Größenverhältnisse zueinander bestehen.

Es kann im Zusammenhang mit dem Verlegen von Energiekabeln insbesondere vorgesehen sein, dass eine Überwachungsleitung zwischen den eigentlichen Energiekabeln verlegt wird.

In einer anderen vorteilhaften Ausgestaltung eines Aspekts der Erfindung umfasst der Ziehkopf einen Zugkraftsensor zur Erfassung einer Zugkraft, die vom Ziehkopf beim Verlegen auf eines der zu verlegenden Rohre oder Kabel aufgebracht wird.

Die vor Ort tatsächlich auftretenden Kraftverhältnisse hängen wesentlichen mit den jeweiligen Bodenbeschaffenheiten zusammen und lassen sich bisweilen nur schwer vorausberechnen. Es kann beim Einziehen vorkommen, dass die Zugkräfte derart groß werden, dass die Belastungsgrenzen der einzuziehenden Rohre und/oder Kabel erreicht werden, wobei dies mit Hilfe eines Zugkraftsensors einfach erkannt werden kann, so dass vor einem Versagen geeignete Maßnahme ergriffen werden können. Es ist z.B. möglich, eine zusätzliche Grube vorzusehen, um ein weiteres Ziehen unnötig zu machen.

In einer anderen vorteilhaften Ausgestaltung eines Aspekts der Erfindung ist wenigstens ein hinteres Anschlusselement mit einem Zugunterstützungselement versehen, wobei das Zugunterstützungselement für eine verteilte Aufbringung von Zugkraft entlang einer Längsrichtung des mit dem Anschlusselement gekoppelten Rohres oder Kabels ausgestaltet ist.

In einer bevorzugten Variante der obigen Ausgestaltung ist das hintere Anschlusselement mit dem Zugunterstützungselement für eine Kopplung mit einem Rohr ausgestaltet, wobei das Zugunterstützungselement für ein Sich-Erstrecken innerhalb des gekoppelten Rohres und einen jeweiligen Reibschluss durch mehrere Reibkörper an mehreren, in Längsrichtung des Rohres verteilten Stellen an einer Innenseite des Rohres ausgestaltet ist.

Das Zugunterstützungselement kann beispielsweise als ein Kabel ausgestaltet sein, dass eine (deutlich) größere Zugfestigkeit als das entsprechende zu verlegende Rohr oder Kabel aufweist, wobei die verteilte Kraftkopplung des Zugunterstützungselement mit dem Rohr oder Kabel die zu ziehende Länge um ein Mehrfaches verlängern kann.

In einer anderen vorteilhaften Ausgestaltung eines Aspekts der Erfindung weist der Ziehkopf eine oder mehrere Schmiermitteldüsen auf, die zur Abgabe von Schmiermittel zur Verringerung eines Reibwiderstands der zu verlegenden Rohre und/oder Kabel beim Verlegen ausgestaltet sind.

In einer bevorzugten Variante der obigen Ausgestaltung ist der Ziehkopf für eine Zuleitung von Schmiermittel von der Zugeinrichtung ausgestaltet.

Durch eine geeignete Zufuhr von Schmiermittel, etwa in Form von Bohrflüssigkeit, kann die zu erreichende Zuglänge aufgrund der verringerten Reibung vergrößert werden.

In einer anderen vorteilhaften Ausgestaltung eines Aspekts der Erfindung weist Ziehkopf wenigstens eine Lagesteuereinrichtung auf, die im Betrieb für eine Einwirkung auf eine Rotationslage des Ziehkopfes oder wenigstens eines hinteren Anschlusselements um eine Mittelachse des Pilotbohrlochs ausgestaltet ist.

In einer bevorzugten Variante der obigen Ausgestaltung weist die Lagersteuereinrichtung verstellbare Steuerelemente an einer Außenseite des Ziehkopfes auf.

In einer weiteren bevorzugten Variante der obigen Ausgestaltung ist die Lagesteuereinrichtung zum Bewirken einer Rotationskraft gegenüber der Zugeinrichtung ausgestaltet, so dass zumindest ein Teil des Ziehkopfes gegenüber der Zugeinrichtung um die Mittelachse des Pilotbohrlochs verdreht wird.

Mit Steuerungsmöglichkeiten für den Ziehkopf ergeben sich zusätzliche Freiheitsgrade beim Verlegen und damit auch bessere Möglichkeiten, auf Bodenverhältnisse oder ähnliches einzugehen.

In einer anderen vorteilhaften Ausgestaltung eines Aspekts der Erfindung sind die hinteren Anschlusselemente zur Kopplung mit Rohren und/oder Kabeln vorgesehen, derart dass deren Gesamtquerschnitt in einem Bereich von 80% bis 120% eines Querschnitts des Pilotbohrlochs oder des durch den Ziehkopf aufgeweiteten Pilotbohrlochs liegt.

Ein derartiges Verhältnis der Querschnitte erlaubt einerseits einen vertretbaren Aufwand beim Versatz von Bodenmaterial, wobei zudem eine geringe Versackungsgefahr besteht, wenn der Querschnitt des Pilotbohrlochs nahezu oder korrekt durch den Querschnitt der Rohre und/oder Kabel ersetzt wird.

In einer anderen vorteilhaften Ausgestaltung eines Aspekts der Erfindung ist der Ziehkopf dazu ausgestaltet, eine Verlegung von im Ziehkopf vorgehaltenem Material in das zwischen die hinteren Anschlusselemente versetzte Bodenmartial vorzunehmen,

Es kann hier beispielsweise vorgesehen werden, in das zwischen den Rohren/Kabeln verschobene Bodenmaterial gezielt etwas einzubringen. Ein Beispiel hier ist etwa Flatterband, wie es bisweilen auch beim offenen Graben-Verlegen mit eingelegt wird, um die Trasse zu markieren. Eine andere Möglichkeit umfasst eine Serie von RFID-Transpondern oder dergleichen, um die Lage der Verlegung in einer Weise zu markieren, die von Übertage erfasst werden kann.

In einer anderen vorteilhaften Ausgestaltung eines Aspekts der Erfindung ist ein System zur parallelen grabenlosen Rohr- und/oder Kabelverlegung in einem Boden vorgesehen, mit einem erfindungsgemäßen Ziehkopf, einer Bohreinrichtung zur Erstellung eines Pilotbohrlochs im Boden und einer Zugeinrichtung zur Kopplung mit dem Ziehkopf und zum Ziehen des Ziehkopfs mit daran angekoppelten Rohren und/oder Kabeln durch das Pilotbohrloch.

Im Rahmen der vorliegenden Erfindung ist auch explizit ein System vorgesehen, das die verschieden Aspekte miteinander kombiniert, nämlich ein System zur parallelen grabenlosen Rohr- und/oder Kabelverlegung in einem Boden, mit einer Bohrvorrichtung zum Erstellen einer oder mehrerer Multifunktionsbohrungen, die sich jeweils von der Oberfläche bis zu einem Schnittpunkt mit einer zur Verlegung des Kabels oder Rohres vorgesehenen Bohrlinie und darüber hinaus erstrecken, einer Horizontalbohrvorrichtung zum Durchführen einer gerichteten Horizontalbohrung entlang der Bohrlinie unter Nutzung von unter Druck zugeführter Bohrflüssigkeit, einer Fördereinrichtung zum Abfördern von Bohrflüssigkeit aus dem durch die Horizontalbohrung erstellten Bohrloch durch wenigstens eine der Multifunktionsbohrungen hindurch und einer Steuereinheit zur Bestimmung der Position der einen oder mehreren Multifunktionsbohrungen und/oder zur Steuerung der Fördereinrichtung, wobei die Horizontalbohrvorrichtung zur Erstellung eines Pilotbohrlochs im Boden dient und das System einen erfindungsgemäßen Ziehkopf und eine Zugeinrichtung zur Kopplung mit dem Ziehkopf und zum Ziehen des Ziehkopfs mit daran angekoppelten Rohren und/oder Kabeln durch das Pilotbohrloch aufweist.

Hierbei sei erwähnt, dass die zur Verlegung eines Kabels oder Rohres vorgesehene Bohrlinie in diesem Zusammenhang nicht notwendigerweise mit einer Mittelachse des verlegten Rohres oder Kabels zusammenfallen muss.

Bei der Anwendung des erfindungsgemäßen Ziehkopf, ggf. in einer der vorteilhaften Ausgestaltungen, lässt sich ein optimaler und gewünschter Abstand der Kabel (z.B. konstant oder variabel in Abhängigkeit der Tiefe) mit einer minimalen Überdeckung unter Beibehaltung einer Kurvengängigkeit (rechs/links und oben/unten) erreichen, wobei hier geringe Kosten anfallen (insbesondere wegen einer schnellen Verlegung), im Vergleich zu bekannten Lösungen weniger Bohrspülung und weniger Bohrklein (im Sinne einer Abfallvermeidung) anfallen, wobei noch immer einer gute Verankerung der Rohre oder Kabel im Boden erreichbar ist (insbesondere im Zusammenspiel mit den oben erläuterten Bindemittelankern) und keine oder eine nur minimale Versackungsgefahr besteht.

Wird der Ziehkopf bereits bei der Erstellung des Pilotbohrlochs mit der Bohreinrichtung gekoppelt, so ist der dann vor dem Ziehkopf angeordnete Bohrkopf der Bohreinrichtung bevorzugt soweit größer als das hinter dem Ziehkopf angeordnete Bohrgestänge, dass die Querschnittsdifferenz etwa dem Querschnitt der zu verlegenden Rohre und/oder Kabel entspricht. Bei einem gegenüber einem Bohrgestänge im Durchmesser ausreichend großem Bohrkopf können neben dem Bohrgestände dann durch den Ziehkopf die zu verlegenden Rohre und/oder Kabel mitgeführt werden, wobei dabei auch vorgesehen sein kann, durch das Bohrgestänge oder mindestens eines der Rohre Bohrklein abzuführen.

Die Bohrkleinabfuhr kann etwa dergestalt ablaufen, dass die beiden Zusatzrohre vorne offen sind und die durch das Bohrgestänge zugeführte Spülung auch dazu verwendet wird, dass in die Zusatzrohre gedrückte/gezogene Bohrklein aus diesen heraus zu spülen.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines Arbeitsschritts "Erstellung der Multifunktionsbohrungen" eines ersten Ausführungsbeispiels des erfindungsgemäßen Verfahrens zur grabenlosen Verlegung eines Kabels oder Rohres im Boden,
- Fig. 2: eine schematische Darstellung zur Illustration eines Arbeitsschritts "Erstellung der Horizontalbohrung" des ersten Ausführungsbeispiels des erfindungsgemäßen Verfahrens zur grabenlosen Verlegung eines Kabels oder Rohres im Boden,
- Fig. 3: eine schematische Darstellung zur Illustration eines Arbeitsschritts "Einziehen des Schutzrohrs in die Horizontalbohrung" des ersten Ausführungsbeispiels des erfindungsgemäßen Verfahrens zur grabenlosen Verlegung eines Kabels oder Rohres im Boden,
- Fig. 4: eine schematische Darstellung zur Illustration eines Arbeitsschritts "Verankern des Schutzrohrs in der Horizontalbohrung und Rückbauen der Multifunktionsbohrungen" des ersten Ausführungsbeispiels des erfindungsgemäßen Verfahrens zur grabenlosen Verlegung eines Kabels oder Rohres im Boden,
- Fig. 5: eine schematische Darstellung zur Illustration eines Arbeitsschritts "Einziehen des Kabels in das Schutzrohr" des ersten Ausführungsbeispiels des erfindungsgemäßen Verfahrens zur grabenlosen Verlegung eines Kabels oder Rohres im Boden,
- Fig. 6: eine schematische Darstellung zur Illustration einer Situation nach Abschluss des Verfahrens zur grabenlosen Verlegung eines Kabels oder Rohres im Boden gemäß dem ersten Ausführungsbeispiel der Erfindung,
- Fig. 7: ein schematisches Ablaufdiagramm eines zweiten Ausführungsbeispiels des erfindungsgemäßen Verfahrens zur grabenlosen Verlegung eines Kabels oder Rohres im Boden,
- Fig. 8: eine schematische Übersicht über ein Ausführungsbeispiel eines erfindungsgemäßen Systems zur grabenlosen Verlegung eines Kabels oder Rohres in einem Boden.
- Fig. 9: schematische Darstellungen eines ersten Ausführungsbeispiels eines erfindungsgemäßen Ziehkopfes,
- Fig. 10: eine schematische Darstellung eines zweiten Ausführungsbeispiels eines erfindungsgemäßen Ziehkopfes,
- Fig. 11: ein schematisches Ablaufdiagramm eines Ausführungsbeispiels des erfindungsgemäßen Verfahrens zum parallelen Verlegen,
- Fig. 12: eine schematische Darstellung eines dritten Ausführungsbeispiels eines erfindungsgemäßen Ziehkopfes und
- Fig. 13: ein schematisches Ablaufdiagramm eines weiteren Ausführungsbeispiels des erfindungsgemäßen Verfahrens zum parallelen Verlegen.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

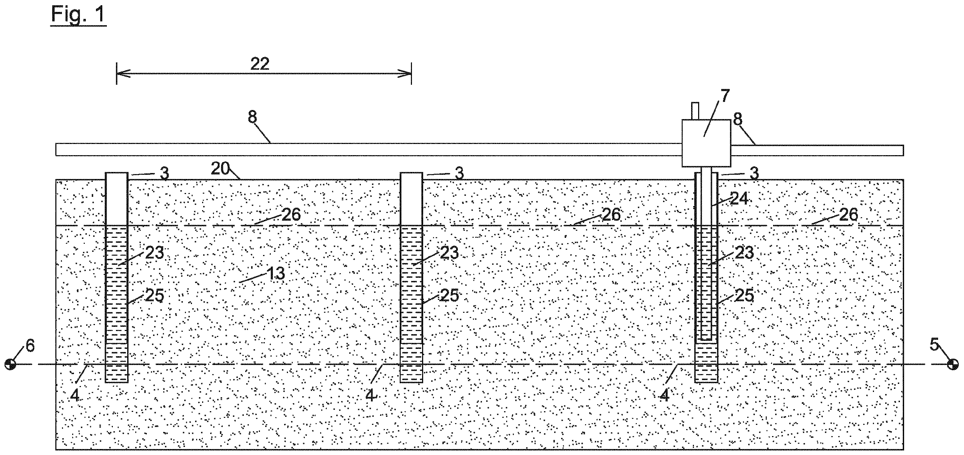

Mit Fig. 1 wird ein erstes Ausführungsbeispiel des erfindungsgemäßen Verfahrens beispielhaft an Hand des Arbeitsschritts "Erstellung der Multifunktionsbohrungen" erläutert.

Zunächst werden an der Geländeoberfläche 20 die vertikal angeordneten Multifunktionsbohrungen 3 von oberhalb der im Boden 13 verlaufenden Bohrlinie 4 in einem Abstand 22 voneinander erstellt. Dieser Abstand 22 wird sich in der Praxis - in Abhängigkeit von den spezifischen Bodenbedingungen und der jeweiligen Topographie - auf eine Größenordnung zwischen etwa 50 m und 250 m belaufen. Die Tiefe der Multifunktionsbohrungen 3 wird so festgelegt, dass das untere Ende unterhalb der geplanten Bohrlinie 4 endet. Ein Teilbereich der Multifunktionsbohrung 3 kann bei Bedarf mittels einer Verrohrung 25 stabilisiert werden. Diese Verrohrung endet bevorzugt oberhalb der geplanten Bohrlinie 4. Steht im Boden 13 Grundwasser an, so wird sich der Grundwasserspiegel 26 zunächst auch in den Multifunktionsbohrungen 3 einstellen. Der aus den Multifunktionsbohrungen 3 entnommene Boden 13 wird bevorzugt analysiert und bewertet und ist damit Basis der Auslegung des Bohrkopfs 9, des Bohrgestänges 10 und der Bohrflüssigkeit 11 zur Erstellung der Horizontalbohrung 2.

Als nächstes wird eine Rückleitung 8 von einem Startpunkt 5 bis mindestens zur letzten Multifunktionsbohrung 3 vor dem Zielpunkt 6 errichtet. Diese Rückleitung 8 hat bevorzugt einen Durchmesser von etwa 150 mm. Sodann wird an mindestens einer Multifunktionsbohrung 3 eine Pumpe 7 positioniert und in diese Multifunktionsbohrung 3 ein Vertikalrohr 24 eingebracht. Die Pumpe 7 wird dann sowohl mit der Rückleitung 8 (Druckseite) als auch dem Vertikalrohr 24 (Saugseite) verbunden.

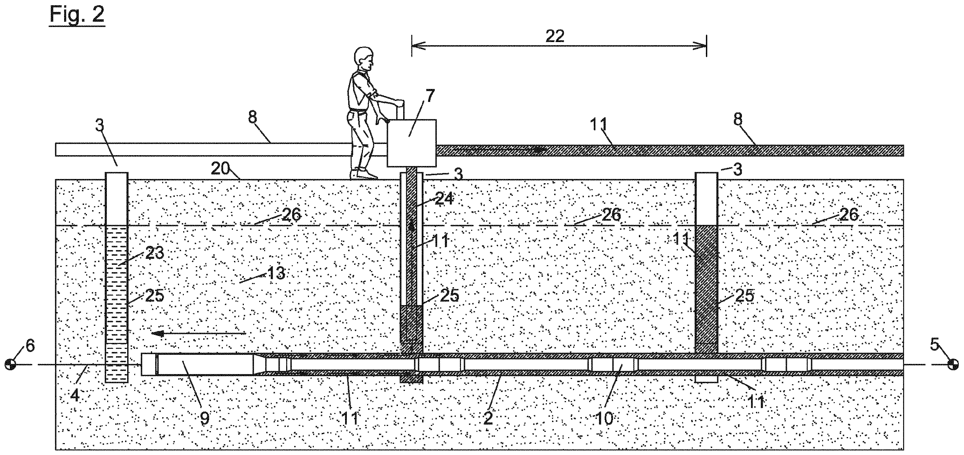

Mit Fig. 2 wird das erste Ausführungsbeispiel des erfindungsgemäßen Verfahrens beispielhaft an Hand des Arbeitsschritts "Erstellung der Horizontalbohrung" erläutert.

Die Horizontalbohrung 2 wird mittels eines steuerbaren Bohrkopfs 9, eines Bohrgestänges 10 und einer Bohrflüssigkeit 11 erstellt. Diese Vorrichtungen sowie die zur Vermessung der Position des Bohrkopfs 9 und alle weiteren notwendigen Techniken (wie z.B. ein Bohrgerät, eine Pumpe für die Bohrflüssigkeit etc.) sind grundsätzlich aus der Bohrindustrie weithin bekannt und bewährt und werden deshalb nicht näher erläutert.

Im Unterschied zu dem Stand der Technik befindet sich in einer bevorzugten Ausführungsform auch das Messsystem für die Positionsbestimmung und die Überwachung des hydraulischen Drucks in der Horizontalbohrung 2 im Bohrkopf 9 in direkter Nähe (ca. 1 - 2 m, in Fig. 2 nicht dargestellt) zur Ortsbrust des Bodens 13. Bedingt durch die geringe Tiefenlage des Bohrkopfs 9 können alle Messdaten drahtlos durch den Boden 13 zur Geländeoberfläche 26 und von dort weiter zum Steuerstand der Bohranlage übertragen werden (in Fig. 2 nicht dargestellt). Dadurch wird eine sehr genaue Erstellung der Horizontalbohrung 2 entlang der Bohrlinie 4 durch exakte Positionsdaten und dadurch kurze Reaktionszeiten für eine möglicherweise erforderliche Korrektur ermöglicht.

Auf den Kreislauf der eingesetzten Bohrflüssigkeit 11 sei besonders hingewiesen. Die Bohrflüssigkeit 11 wird zunächst, wie üblich, durch das Bohrgestänge 10 zum Bohrkopf 9 gepumpt. Dort tritt sie in die Horizontalbohrung 2 ein und nimmt den vom Bohrkopf 9 gelösten Boden 13 auf. Im weiteren fließt sie dann durch den Ringraum zwischen Horizontalbohrung 2 und Bohrgestänge 10 in Richtung Startpunkt 5. Abweichend zu dem nach dem Stand der Technik üblichen Fließweg bewegt sich die Bohrspülung 11 jedoch nicht durch die gesamte Horizontalbohrung 2, sondern nur bis zu einer nahe am Bohrkopf 9 gelegenen Multifunktionsbohrung 3 und dort durch das Vertikalrohr 24, die Pumpe 7 und die Rückleitung 8 zum Startpunkt 5. Diese erzwungene Richtungsänderung der Fließbewegung der Bohrflüssigkeit 11 wird dadurch erreicht, dass der hydraulische Druck in der betreffenden Multifunktionsbohrung 3 deutlich niedriger ist als der hydraulische Druck in der Horizontalbohrung 2 zwischen der betreffenden Multifunktionsbohrung 3 und dem Startpunkt 5.

Der niedrige hydraulische Druck in der betreffenden Multifunktionsbohrung 3 wird mittels der Pumpe 7 erreicht. Diejenigen Multifunktionsbohrungen 3, welche der Bohrkopf 9 bereits passiert hat, werden bevorzugt mit Bohrflüssigkeit 11 aufgefüllt, so dass sich in diesem Bereich kein oder nur ein sehr geringes hydraulisches Druckgefälle einstellt.

Bevorzugt - in Fig. 2 aber nicht dargestellt - kann das Bohrgestänge 10 aus einem vorderen Abschnitt hinter dem Bohrkopf 10, der einen relativ kleinen Durchmesser aufweist und dadurch wenig Fließwiderstand für die Bohrflüssigkeit 11 bis zur ersten Multifunktionsbohrung 3 erzeugt, und einen hinteren Abschnitt Bohrgestänge 10 erstellt werden, der bis zum Startpunkt 5 reicht und einen relativ großen Durchmesser aufweist und dadurch hohe Stabilität gegen Ausknicken und damit eine große übertragbare Schubkraft besitzt.

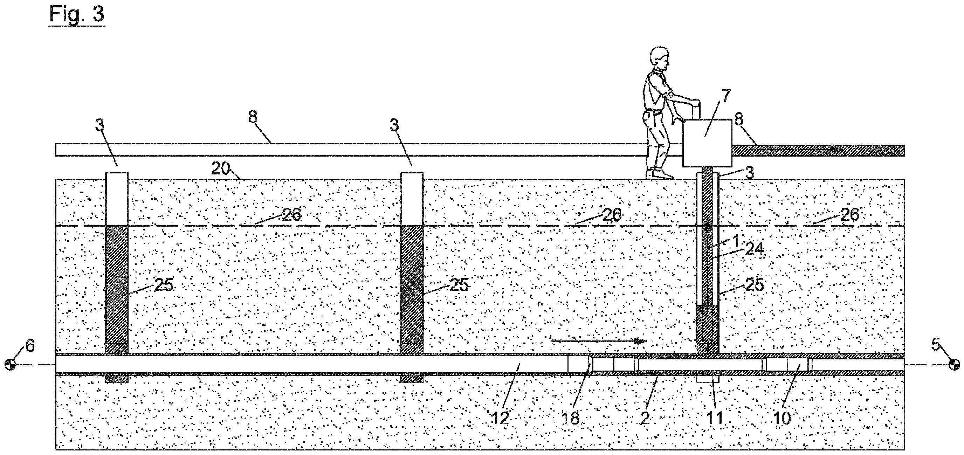

Mit Fig. 3 wird das erste Ausführungsbeispiel des erfindungsgemäßen Verfahrens beispielhaft an Hand des Arbeitsschritts "Einziehen des Schutzrohrs in die Horizontalbohrung" erläutert.

Statt des Bohrkopfs 9 wird ein Ziehkopf 18 mit dem Bohrgestänge 10 verbunden. Die Rückseite des Ziehkopfs 18 ist mit einem Schutzrohr 12 verbunden. Durch Zurückziehen des Bohrgestänges 10 in Richtung Startpunkt 5 wird so das Schutzrohr 12 in die Horizontalbohrung 2 eingezogen.

Die Bohrflüssigkeit 11 tritt nun am Ziehkopf 18 in die Horizontalbohrung ein und fließt dann durch den Ringraum zwischen Horizontalbohrung 2 und Bohrgestänge 10 in Richtung Startpunkt 5. Wie bereits bei der Erstellung der Horizontalbohrung 2 (s.o.) wird die Bohrflüssigkeit 11 aus einer nahe am Ziehkopf 18 gelegenen Multifunktionsbohrung 3 durch das Vertikalrohr 24, die Pumpe 7 und die Rückleitung 8 zum Startpunkt 5 befördert. Die bereits vom Ziehkopf 18 passierten Multifunktionsbohrungen 3 werden bevorzugt bis auf Höhe des Grundwasserspiegels 26 mit Bohrflüssigkeit 11 aufgefüllt, um in diesem Bereich eine stabile Horizontalbohrung sicherzustellen.

Je nach spezifischen Verhältnissen, insbesondere von Boden 13, Durchmesser der Horizontalbohrung 2 und Durchmesser des Schutzrohrs 12 kann während des Einziehvorgangs des Schutzrohrs 12 in die Horizontalbohrung 2 ggf. auch teilweise oder ganz auf die Zuführung frischer Bohrflüssigkeit 11 zum Ziehkopf 18 verzichtet werden.

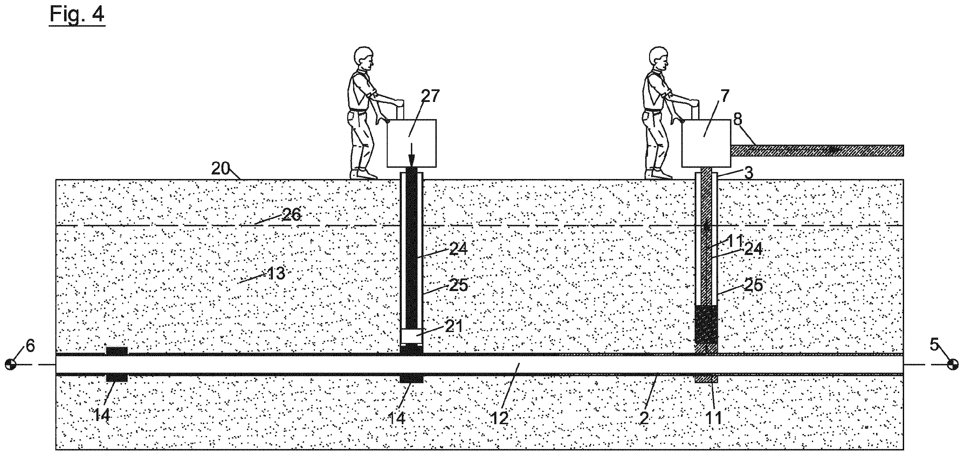

Mit Fig. 4 wird das erste Ausführungsbeispiel des erfindungsgemäßen Verfahrens beispielhaft an Hand des Arbeitsschritts "Verankern des Schutzrohrs in der Horizontalbohrung und Rückbauen der Multifunktionsbohrungen" erläutert.

Mittels einer an einer Multifunktionsbohrung 3 aufgestellten Bindemittelpumpe 27 wird über ein Vertikalrohr 24 Bindemittel 14 in den Ringraum zwischen Horizontalbohrung 2 und Schutzrohr 12 eingepresst. Zur Abdichtung der betreffenden Multifunktionsbohrung 3 wird in einer bevorzugten Ausführungsform ein Packer 21 am unteren Ende der Verrohrung 25 positioniert.

Die während des Verankerns des Schutzrohrs 12 vom Bindemittel 14 verdrängte Bohrflüssigkeit 11 fließt durch den Ringraum zwischen Horizontalbohrung 2 und Schutzrohr 12 in Richtung der nächsten Multifunktionsbohrung 3 und wird von dort durch das Vertikalrohr 24, die Pumpe 7 und die Rückleitung 8 zum Startpunkt 5 befördert.

Diejenigen Multifunktionsbohrungen 3, in deren Bereich die Verankerung des Schutzrohrs 12 bereits abgeschlossen ist, werden zurückgebaut. Dazu wird zunächst der anfangs entnommene Boden 13 wieder lagenweise verfüllt und anschließend die Verrohrung 25 gezogen. Damit stellen sich in diesen Bereichen wieder die gleichen Bedingungen hinsichtlich Boden 3 und Grundwasserspiegel 26 ein wie vor Beginn der Baumaßnahme.

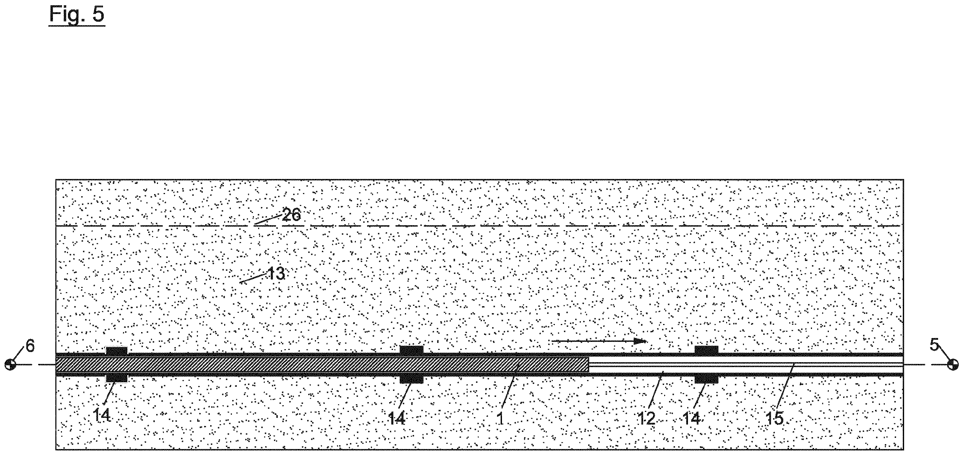

Mit Fig. 5 wird das erste Ausführungsbeispiel des erfindungsgemäßen Verfahrens beispielhaft an Hand des Arbeitsschritts "Einziehen des Kabels in das Schutzrohr" erläutert.

Während dieses Arbeitsschritts ist das Schutzrohr 12 mittels des eingebrachten Bindemittels 14 fest mit dem Boden 13 verbunden. Über ein in das Schutzrohr 12 eingebrachtes Zugmittel 15 wird das Kabel 1 in das Schutzrohr 12 eingezogen.

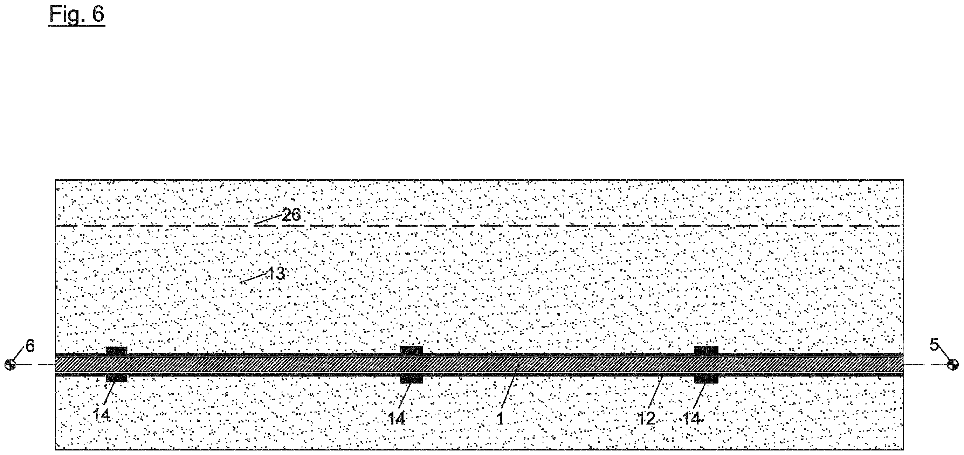

Mit Fig. 6 wird der Zustand nach Durchführung des erfindungsgemäßen Verfahrens dargestellt.

Das Kabel 1 liegt nunmehr über die gesamte Länge vom Eintrittspunkt 5 bis zum Austrittspunkt 6 sicher im Boden 13 verankerten Schutzrohr 12. Auch der Grundwasserstand 26 hat sich wieder auf dem gesamten Baufeld wie vor Beginn der Baumaßnahme eingestellt.

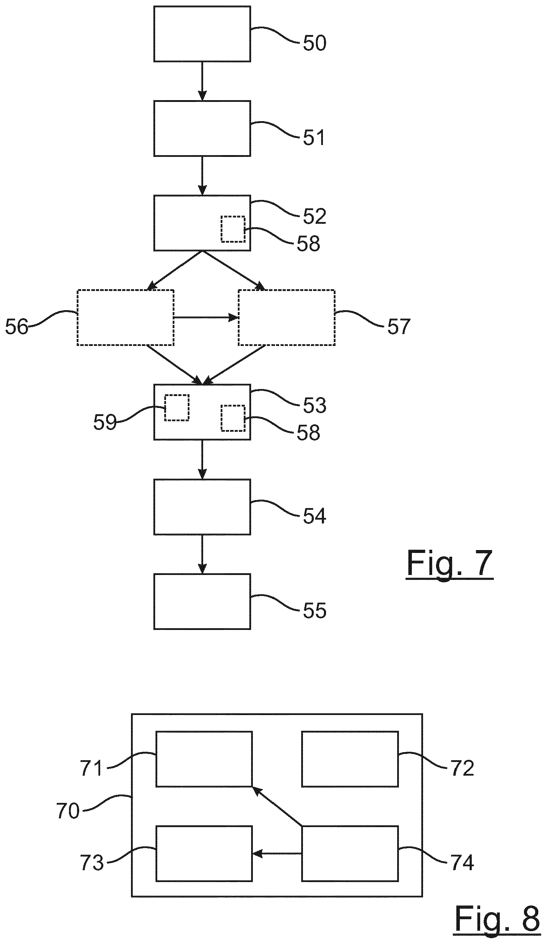

Fig. 7 zeigt ein schematisches Ablaufdiagramm eines zweiten Ausführungsbeispiels des erfindungsgemäßen Verfahrens zur grabenlosen Verlegung eines Kabels oder Rohres im Boden.

Zur Verknüpfung mit den Darstellungen aus Fig. 1 bis 6 werden die dort verwendeten Bezugszeichen auch in der folgenden Erläuterung von Fig. 7 genutzt.

Das Verfahren dient vorliegende zur grabenlosen Verlegung eines Kabels 1 in einem Boden 13 und umfasst einen Erstellschritt 50, einen Aufbauschritt 51, einen Bohrungsschritt 52, einen Einziehschritt 53, einen Verankerungsschritt 54 und einen Abschlussschritt 55.

Der Erstellschritt 50 umfasst ein Erstellen von einer oder mehreren vertikal ausgerichteten Multifunktionsbohrungen 3 in einem vorgegebenen Abstand zueinander von einer Geländeoberfläche 20 bis unterhalb einer vorgegebenen Bohrlinie 4, wobei die Bohrlinie 4 zwischen einem Startpunkt 5 und einem Zielpunkt 6 durch den Boden 13 verläuft.

Der Aufbauschritt 51 umfasst ein Aufbauen mindestens einer Pumpe 7 und mindestens eines Vertikalrohrs 24 an mindestens einer der Multifunktionsbohrungen 3, ein Aufbauen mindestens einer Rückleitung 8 vom Startpunkt 5 bis zum Zielpunkt 6 und ein Verbinden der Rückleitung 8 mit der mindestens einen Pumpe 7.

Der Bohrungsschritt 52 umfasst ein Durchführen einer Horizontalbohrung 2 in dem Boden 13 mittels eines steuerbaren Bohrkopfs 9 und eines Bohrgestänges 10 entlang der vorgegebenen Bohrlinie 4, wobei die für den Erstellvorgang verwendete Bohrflüssigkeit 11 vom Startpunkt 5 durch das Bohrgestänge 10 dem steuerbaren Bohrkopf 9 zugeführt wird und außerhalb des Bohrgestänges 10 durch die Horizontalbohrung 2 zurückfließt, wobei die zurückfließende Bohrflüssigkeit 11 von der mindestens einen Pumpe 7 über mindestens ein Vertikalrohr 24 in mindestens einer der Multifunktionsbohrungen 3 aus der Horizontalbohrung 2 abgepumpt und durch die mindestens eine Rückleitung 8 zum Startpunkt 5 gefördert wird.

Es ist möglich, den Erstellschritt 50, den Aufbauschritt 51 und den Bohrungsschritt 52 sukzessive vorzunehmen, so dass jeweils nach Erstellen einer Multifunktionsbohrung 3 ein jeweiliger Aufbauschritt 51 und ein Bohrungsschritt 52 folgen, bis nach ausreichender Wiederholung der Zielpunkt 6 erreicht ist. Es ist ebenso möglich, mehrere oder alle Multifunktionsbohrungen in einem Durchgang zu erstellen, wobei dann ggf. der Aufbauschritt 51 und der Bohrungsschritt 52 entsprechend sukzessive ausgeführt werden, wobei es hierbei wiederum ebenso möglich ist, die Multifunktionsbohrungen 3 sämtliche oder zumindest zum Teil bereits so auszustatten, dass die Bohrung in einem Durchgang mehrere der Multifunktionsbohrungen passieren kann.

Der Einziehschritt 53 umfasst ein Demontieren des Bohrkopfs 9 vom Bohrgestänge 10 am Zielpunkt 6 und Verbinden des Bohrgestänges 10 über einen Ziehkopf 18 mit einem Schutzohr 12, ein Zurückziehen des Bohrgestänges 10 zum Startpunkt 5 und dabei ein gleichzeitiges Einziehen des Schutzrohres 12 in die Horizontalbohrung 2, wobei die zurückfließende und/oder vom Schutzrohr 12 verdrängte Bohrflüssigkeit 11 von der mindestens einen Pumpe 7 über mindestens ein Vertikalrohr 24 in mindestens einer der Multifunktionsbohrung 3 aus der Horizontalbohrung 2 abgepumpt und durch die mindestens eine Rückleitung 8 zum Startpunkt 5 gefördert wird.

Der Verankerungsschritt 54 umfasst ein Verankern des Schutzrohres 12 im Boden 13 durch Verpressen von Bindemittel 14 in die Horizontalbohrung 2 durch mindestens eine Bindemittelpumpe 27 und mindestens ein Vertikalrohr 24 in mindestens einer Multifunktionsbohrung 3, wobei die vom Bindemittel 14 verdrängte Bohrflüssigkeit 11 von der mindestens einen Pumpe 7 über mindestens ein Vertikalrohr 24 in mindestens einer der Multifunktionsbohrung 3 aus der Horizontalbohrung 2 abgepumpt und durch die mindestens eine Rückleitung 8 zum Startpunkt 5 gefördert wird

Der Abschlussschritt 55 umfasst ein Rückbauen der Multifunktionsbohrungen 3, der mindestens einen Pumpe 7, der mindestens einen Rückleitung 8, ein Einbringen eines Zugmittels 15 in das Schutzrohr 12 und ein Verlegen des Kabels 1 in das Schutzrohr 12 mittels des Zugmittels 15.

In einer Variante des Ausführungsbeispiels (betont durch die gestrichelte Darstellung des Blocks in der Figur) erfolgt vor dem Einziehschritt 53 ein Aufweitschritt 56 mit einem Aufweiten der Horizontalbohrung 2 auf einen größeren Durchmesser mittels eines Räumers 16. Es ist allerdings auch möglich, das Aufweiten der Horizontalbohrung 2 auf einen größeren Durchmesser mittels eines Räumers 16 und gleichzeitig mit dem Einziehen des Schutzrohrs 12 in die (aufgeweitete) Horizontalbohrung 2 vorzunehmen. Es ist ebenfalls möglich, mehrere aufeinanderfolgende Aufweitschritte vorzusehen.

In einer Weiterführung ist ein alternativer oder ergänzender Zuführschritt 57 vorgesehen, mit einem Aufbauen mindestens einer Zuleitung 17 vom Startpunkt 5 bis mindestens zur letzten Multifunktionsbohrung 3 vor dem Zielpunkt 6, Zuführen von Bohrflüssigkeit 11 während des Erstellens der gesteuerten Horizontalbohrung 2 und/oder während des Aufweitens und/oder Einziehens vom Startpunkt 5 durch die Zuleitung 17 und mindestens ein Vertikalrohr 24 in mindestens einer Multifunktionsbohrung 3 in die Horizontalbohrung 2 und/oder Zuführen von Bindemittel 14 während des Verankerns vom Startpunkt 5 durch die Zuleitung 17 und mindestens ein Vertikalrohr 24 in mindestens einer Multifunktionsbohrung 3 in die Horizontalbohrung 2.

In einer anderen Weiterführung umfassen der Bohrungsschritt 52 und/oder der Einziehschritt 53 einen Mess- und Steuerschritt 58 mit einem Messen des hydraulischen Drucks in der Horizontalbohrung 2 im Bereich des Bohrkopfs 9 während der Erstellung und/oder im Bereich des Räumers 16 während des Räumens und/oder im Bereich des Ziehkopfs 18 während des Einziehens des Schutzrohres 12 sowie in mindestens einer Multifunktionsbohrung 3 und einem Steuern der mindestens einen Pumpe 7 an mindestens einer Multifunktionsbohrung 3 an Hand der Messwerte der Drucküberwachung.

Hierbei kann insbesondere vorgesehen werden, die Ansatzpunkte und die Erstellung der Multifunktionsbohrungen 3 während des Erstellens der Horizontalbohrung 2 basierend auf den gemessenen Drücken in der Horizontalbohrung 2 festzulegen bzw. vorzunehmen.

Optional umfasst der Einziehschritt 53 ein Ballastieren 59 des Schutzrohres 12 während des Einziehens in die Horizontalbohrung 2.

Fig. 8 zeigt eine schematische Übersicht über ein Ausführungsbeispiel eines erfindungsgemäßen Systems zur grabenlosen Verlegung eines Kabels oder Rohres in einem Boden.

Das System 70 zur grabenlosen Verlegung eines Kabels oder Rohres in einem Boden umfasst eine Bohrvorrichtung 71, eine Horizontalbohrvorrichtung 72, eine Fördereinrichtung 73 und eine Steuereinheit 74.

Die Bohrvorrichtung 71 dient zum Erstellen einer oder mehreren Multifunktionsbohrungen, die sich jeweils von der Oberfläche bis zu einem Schnittpunkt mit einer zur Verlegung des Kabels oder Rohres vorgesehenen Bohrlinie und darüber hinaus erstrecken.

Die Horizontalbohrvorrichtung 72 dient zum Durchführen einer gerichteten Horizontalbohrung entlang der Bohrlinie unter Nutzung von unter Druck zugeführter Bohrflüssigkeit.

Die Fördereinrichtung 73 dient zum Abfördern von Bohrflüssigkeit aus dem durch die Horizontalbohrung erstellten Bohrloch durch wenigstens eine der Multifunktionsbohrungen hindurch.

Die Steuereinheit 74 dient zur Bestimmung der Position der einen oder mehreren Multifunktionsbohrungen und zur Steuerung der Fördereinrichtung 73.

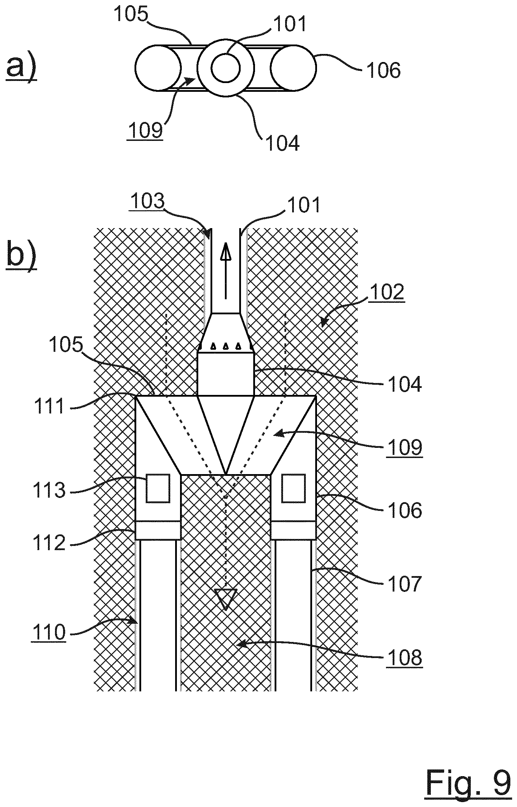

Fig. 9 zeigt schematische Darstellungen eines ersten Ausführungsbeispiels eines erfindungsgemäßen Ziehkopfes, wobei Fig. 9 a) eine Sicht aus Richtung einer Zugeinrichtung auf den Ziehkopf zeigt, während Fig. 9 b) eine Ansicht quer zur Darstellung aus Fig. 9 in teilweiser Schnittdarstellung und teilweiser Aufsichtsdarstellung einer Anordnung des Ziehkopfs mit Zugeinrichtung und angeschlossenen Rohren im Boden zeigt.

Der Ziehkopf umfasst ein vorderes Anschlusselement 104, das vorliegend zum Aufweiten eines Pilotbohrlochs 103 im Boden 102 ausgestaltet ist. In der Darstellung von Fig. 9 b) ist das vordere Anschlusselement 104 mit einer Zugeinrichtung 101 gekoppelt (die Zugrichtung ist durch einen Pfeil angedeutet). Über jeweils zwei Verbindungselemente 105 ist das vordere Anschlusselement 104 mit zwei hinteren Anschlusselementen 106 verbunden. Die hinteren Anschlusselemente 106 sind gegenüber dem vorderen Anschlusselement parallel versetzt und mit jeweils einem Rohr 107 gekoppelt, das jeweils im Boden 102 von einem Ringraum 110 umgeben ist.

Die zwei jeweiligen Verbindungselemente 105 umgeben hierbei jeweils einen Durchtrittsbereich 109 zwischen den vorderen Anschlusselement 104 und einem hinteren Anschlusselement 106.

Die hinteren Anschlusselemente 106 weisen jeweils an ihren dem vorderen Anschlusselement 104 zugewandten Seite eine schräge Flanke auf, die nach vorn, also in Zugrichtung, in einer Lösekante 111 endet.

Die hinteren Anschlusselement 106 sind zudem in der Kopplung mit dem jeweiligen Rohr 107 mit einem jeweiligen Zugkraftsensor 112 ausgestattet und besitzen an ihrer Ober- und Unterseite jeweils Steuerklappen 113.

Eine beispielhafte Umsetzung sieht etwa ein Pilotbohrloch 103 mit einem Durchmesser von 300 mm in 2 bis 4 m Tiefe vor, wobei das Pilotbohrloch 103 vorteilhafterweise mit Multifunktionsbohrungen in einem Abstand von beispielsweise 50 bis 100 m versehen ist, wie sie auch weiter oben diskutiert sind.

Nach Erstellen des Pilotbohrlochs 103 wird der Bohrkopf vom Bohrgestänge entfernt und stattdessen der Ziehkopf anmontiert, wobei die hinteren Anschlusselemente 106 jeweils als Verdränger (DN 300 mm) und das vordere Anschlusselement 104 als Räumer (DN 420 mm) ausgestaltet sind.

An den hinteren Anschlusselementen 106 sind Schutzrohre 107 (aus PEHD, 250 x 34,2 mm) angebracht, wobei der Abstand 1 m beträgt und das Pilotbohrloch mittig angeordnet ist.

Wird nun die in Fig. 9 b) illustrierte Anordnung mittels der Zugeinrichtung 101 in Zugrichtung gezogen, so weitet das vordere Anschlusselement 104 zunächst das Pilotbohrloch 103 auf. Im Fall des Aufweitens auf einen Durchmesser von 420 mm ergibt sich eine Größe von 126 I/m.

Zudem wird, insbesondere durch die Lösekanten 111 und die daran anschließenden Flanke der hinteren Anschlusselemente 106 Bodenmaterial im Boden 102 neben dem Pilotbohrloch 103 durch die Durchtrittsbereich 109 in den Bereich hinter dem vorderen Anschlusselement 104 verdrängt, so dass dort praktisch das Pilotbohrloch 103 verfüllt wird (Bezugszeichen 108), wobei durch die Umlagerung von Bodenmaterial Platz für die Rohre 107 und den die Rohre umgebenden Ringraum 110 geschaffen wird. Der Weg ist durch gestrichelte Pfeile illustriert.

Die Größe der Rohre 107 und die Dimensionierung der entsprechenden hinteren Anschlusselemente 106 ist hier beispielsweise so gewählt, dass die sich dabei ergebende Gesamtsumme (2 x 70 I/m bei DN 300 mm) etwas größer als die Größe des aufgeweiteten Pilotbohrlochs 103 ist.

Die hinteren Anschlusselemente 106 sind jeweils mit Steuerklappen 113 versehen, die beim Ziehen des Ziehkopfs eine Lagesteuerung des Ziehkopfs als Ganzem um die Längsrichtung der Zugeinrichtung 101 erlauben. Hiermit kann entweder gezielt eine Verrollung bewirkt oder einer ungewollten Verrollung entgegengewirkt werden.

Ferner umfassen die Anschlusselemente 106 jeweils Zugkraftsensoren 112, mit denen die Zugbelastung der Rohre 107 gemessen werden kann. Wird beispielsweise über einen Zugkraftsensor erkannt, die die Zugbelastung des entsprechenden Rohres 107 (z.B. aufgrund des Reibungswiderstands im Ringraum 110) die Belastbarkeit des Rohres 107 erreicht, so dass ein Versagen oder Abreißen des Rohres 107 bei zusätzlicher Belastung zu befürchten ist, könnte dies dadurch adressiert werden, dass der Zugvorgang abgebrochen wird, an der geeigneten Stelle eine neue Grube als Zugang zur Bohrlinie erstellt und von dort aus mit einer neuen Zugvorgang fortgesetzt wird, wobei die Rohre 107 in der Grube in bekannte Weise gekoppelt werden können.

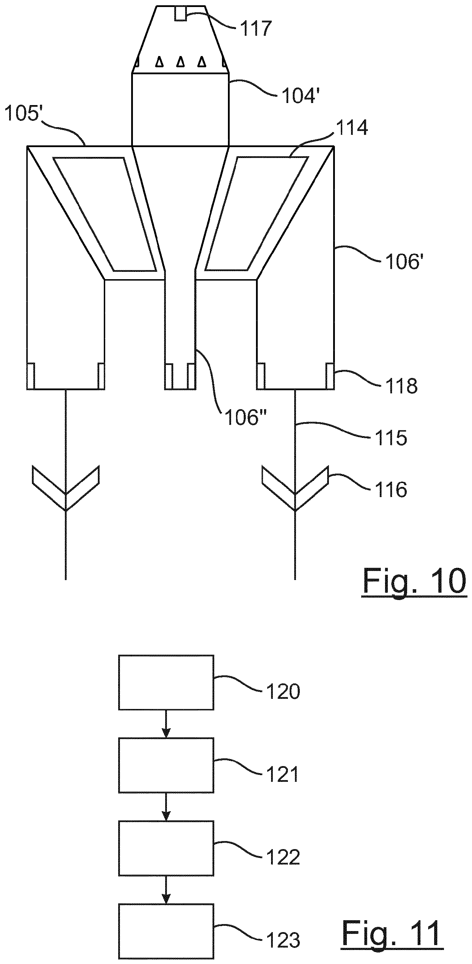

Fig. 10 zeigt eine schematische Darstellung eines zweiten Ausführungsbeispiels eines erfindungsgemäßen Ziehkopfes.

Wie schon beim Ausführungsbeispiel, das in Fig. 9 illustriert ist, umfasst der Ziehkopf ein vorderes Anschlusselement 104' und zwei damit über Verbindungselemente 105' verbundene hintere Anschlusselemente 106'. Hinsichtlich einer Erläuterung hierzu sei auf das obige Ausführungsbeispiel verwiesen.

Abweichend vom obigen Ausführungsbeispiels ist das vordere Anschlusselement 104' hier zudem mit einem koaxial zur Zugeinrichtung (nicht dargestellt) angeordneten weiteren hinteren Anschlusselement 106" versehen, so dass der vorliegende Ziehkopf zum Anschluss von drei Rohren oder Kabeln (nicht dargestellt) ausgestaltet ist.

Der Durchtrittsbereich zwischen dem vorderen Anschlusselement 104' und den äußeren hinteren Anschlusselementen 106' ist hier jeweils mit einer Förderschnecke 114 versehen, die den Versatz von Bodenmaterial aktiv unterstützt.

Die hinteren Anschlusselemente 106', 106" weisen an ihrem hinteren Ende jeweils Schmiermitteldüsen 118 auf, die über eine mit der Zugeinrichtung verbundene Schmiermittelaufnahme 117 im Betrieb durch die Zugeinrichtung hindurch mit Schmiermittel (etwa Bohrflüssigkeit) versorgen werden können.

Der dargestellte Ziehkopf umfasst zudem Zugunterstützungselemente 115, die an den hinteren Anschlusselementen 106' angeordnet sind, um sich durch an diese Anschlusselemente 106' angekoppelte Rohre zu erstrecken. Die Zugunterstützungselemente 115 sind mit Reibkörpern 116 versehen, die eine Kraftübertragung von den Zugunterstützungselementen 115 auf das jeweilige zu ziehende Rohr erlauben, indem die Reibkörper 116 mit der Innenwandung des Rohrs in Reibschluss treten. Damit wird die Zugkrafteinbringung auf das Rohr auf mehrere hintereinander angeordnete Positionen verteilt.

Fig. 11 zeigt ein schematisches Ablaufdiagramm eines Ausführungsbeispiels des erfindungsgemäßen Verfahrens zum parallelen Verlegen.

Wie bereits oben erläutert, wie zunächst in einem Erstellungsschritt 120 ein Pilotbohrlochs im Boden erstellt, gefolgt von einem Koppeln 121 eines Ziehkopfes mit einer sich durch das Pilotbohrloch erstreckenden Zugeinrichtung und einem Koppeln 122 des Ziehkopfes mit den zu verlegenden Rohren und/oder Kabeln. Die Schritte des Koppelns müssen nicht in dieser Reihenfolge ausgeführt werden, wobei auch eine parallele Kopplung möglich ist. Nach dem Koppeln 121, 122 wird in einem Ziehschritt 123 der Ziehkopf mit daran angekoppelten Rohren und/oder Kabeln mittels der Zugeinrichtung durch das Pilotbohrloch gezogen.

Beim Ziehen 123 des Ziehkopfes wird durch den Ziehkopf und/oder die angekoppelten Rohre und/oder Kabel neben dem Pilotbohrloch befindliches Bodenmaterial durch einen Durchtrittsbereich des Ziehkopfes hindurch in einen Bereich zwischen den angekoppelten Rohren und/oder Kabel versetzt.

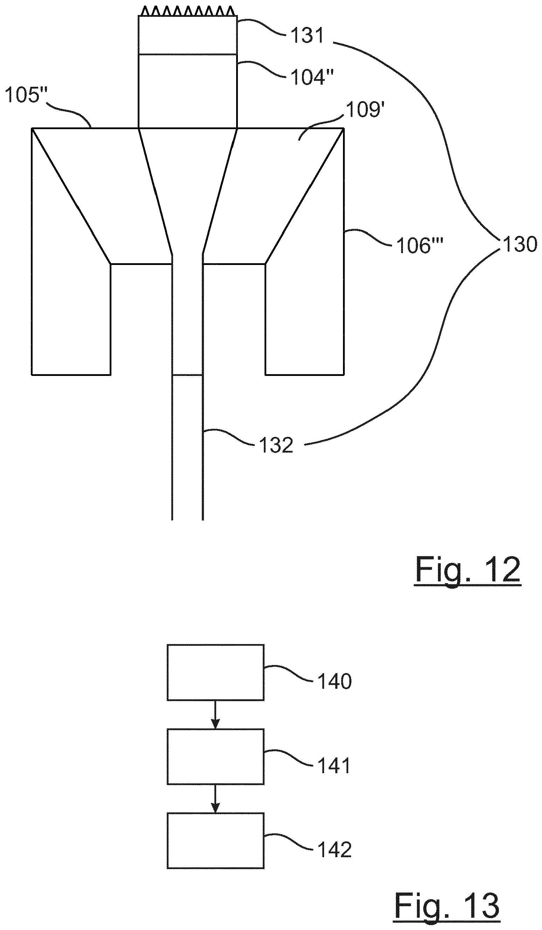

Fig. 12 zeigt eine schematische Darstellung eines dritten Ausführungsbeispiels eines erfindungsgemäßen Ziehkopfes.

Der Ziehkopf dieses Ausführungsbeispiels umfasst, ähnlich zu den oben diskutierten Ausführungsbeispielen ein vorderes Anschlusselement 104", das über jeweils zwei Verbindungselemente 105" mit zwei parallel versetzten hinteren Anschlusselementen 106" verbunden ist, so dass dazwischen ein Durchtrittsbereich 109' vorgesehen ist.

Das vordere Anschlusselement 104" ist hier allerdings zur Kopplung mit einer Bohreinrichtung 130 ausgestaltet, die einen Bohrkopf 131 und ein Bohrgestänge 132 umfasst. Der Bohrkopf 131 dient zur Erstellung des Pilotbohrlochs (hier nicht dargestellt), wobei der entsprechende Vortrieb (und Antrieb) über das Bohrgestänge 132 eingebracht wird.

Fig. 13 zeigt ein schematisches Ablaufdiagramm eines weiteren Ausführungsbeispiels des erfindungsgemäßen Verfahrens zum parallelen Verlegen.

Das Verfahren umfasst ein Koppeln 140 eines Ziehkopfes mit einer Bohreinrichtung zur Erstellung eines Pilotbohrlochs im Boden, ein Koppeln 141 des Ziehkopfes mit den zu verlegenden Rohren und/oder Kabeln und ein Vortreiben 142 des Ziehkopfes mit daran angekoppelten Rohren und/oder Kabeln durch das Pilotbohrloch mittels der Bohreinrichtung beim Bohren des Pilotbohrlochs.

Beim Vortreiben 142 des Ziehkopfes wird, ähnlich zum obigen Ausführungsbeispiel, durch den Ziehkopf und/oder die angekoppelten Rohre und/oder Kabel neben dem Pilotbohrloch befindliches Bodenmaterial durch einen Durchtrittsbereich des Ziehkopfes hindurch in einen Bereich zwischen den angekoppelten Rohren und/oder Kabeln versetzt wird.

Die Schritte des Koppelns 140, 141 müssen nicht in dieser Reihenfolge ausgeführt werden, wobei zudem auch eine parallele Kopplung möglich ist.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Kabel
- 2: Horizontalbohrung
- 3: Multifunktionsbohrung
- 4: Bohrlinie
- 5: Startpunkt
- 6: Zielpunkt
- 7: Pumpe
- 8: Rückleitung
- 9: Bohrkopf
- 10: Bohrgestänge
- 11: Bohrflüssigkeit
- 12: Schutzrohr
- 13: Boden
- 14: Bindemittel
- 15: Zugmittel
- 16: Räumer
- 17: Zuleitung
- 18: Ziehkopf
- 19: Rohrelement
- 20: Geländeoberfläche
- 21: Packer
- 22: Abstand (zwischen Multifunktionsbohrungen)
- 23: Grundwasser
- 24: Vertikalrohr
- 25: Verrohrung
- 26: Grundwasserspiegel
- 27: Bindemittelpumpe
- 50: Erstellschritt
- 51: Aufbauschritt
- 52: Bohrungsschritt
- 53: Einziehschritt
- 54: Verankerungsschritt
- 55: Abschlussschritt
- 56: Aufweitschritt
- 57: Zuführschritt
- 58: Mess- und Steuerschritt
- 59: Ballastieren
- 70: System
- 71: Bohrvorrichtung
- 72: Horizontalbohrvorrichtung
- 73: Fördereinrichtung
- 74: Steuereinheit
- 101: Zugeinrichtung
- 102: Boden
- 103: Pilotbohrloch
- 104: vorderes Anschlusselement
- 104': vorderes Anschlusselement
- 104": vorderes Anschlusselement
- 105: Verbindungselement
- 105': Verbindungselement
- 105": Verbindungselement
- 106: hinteres Anschlusselement
- 106': hinteres Anschlusselement
- 106": hinteres Anschlusselement
- 106'": hinteres Anschlusselement
- 107: Rohr / Kabel
- 108: verfülltes Pilotbohrloch
- 109: Durchtrittsbereich
- 109': Durchtrittsbereich
- 110: Ringraum um Rohr/Kabel
- 111: Lösekante
- 112: Zugkraftsensor
- 113: Steuerklappe
- 114: Förderschnecke
- 115: Zugunterstützungselement
- 116: Reibkörper
- 117: Schmiermittelaufnahme
- 118: Schmiermitteldüse
- 120: Erstellen des Pilotbohrlochs
- 121: Koppeln mit Zugeinrichtung
- 122: Koppeln mit zu verlegenden Rohren/Kabeln
- 123: Ziehen des Ziehkopfs
- 130: Bohreinrichtung
- 131: Bohrkopf
- 132: Bohrgestänge
- 140: Koppeln von Bohreinrichtung und Ziehkopf
- 141: Koppeln mit zu verlegenden Rohren/Kabeln
- 142: Vortreiben des Ziehkopfs

## Patentansprüche

1. Ziehkopf zur parallelen grabenlosen Rohr- und/oder Kabelverlegung in einem Boden (102), mit:
einem vorderen Anschlusselement (104, 104') zur Kopplung des Ziehkopfs mit einer Zugeinrichtung (101) in einem Pilotbohrloch (103) oder einer Bohreinrichtung (130) für ein Pilotbohrloch (103) und
wenigstens zwei hinteren Anschlusselementen (106, 106', 106") zur jeweiligen Kopplung des Ziehkopfs mit einem zu verlegenden Rohr oder Kabel (107),
wobei wenigstens eines der hinteren Anschlusselemente (106, 106') gegenüber dem vorderen Anschlusselement (104, 104') parallel quer zu einer Zugrichtung versetzt angeordnet ist,
wobei der Ziehkopf zwischen wenigstens einem hinteren Anschlusselement (106, 106') und dem vorderen Anschlusselement (104, 104') einen Durchtrittsbereich (109) aufweist, der für beim Verlegen aus einem Bereich neben dem Pilotbohrloch (103) zwischen die hinteren Anschlusselemente (106, 106', 106") versetztes Bodenmaterial durchlässig ist.

2. Ziehkopf nach Anspruch 1, wobei das vordere Anschlusselement (104, 104') für ein Aufweiten des Pilotbohrlochs (103) ausgestaltet ist.

3. Ziehkopf nach einem der Ansprüche 1 oder 2, mit wenigstens einem Löse- und/oder Führungselement (111), das für ein Lösen von zu verdrängendem Bodenmaterial und/oder ein Führen von Bodenmaterial beim Verdrängen ausgestaltet ist.

4. Ziehkopf nach einem der Ansprüche 1 bis 3, mit wenigstens einem Förderelement (114) zum Fördern von Bodenmaterial durch den Durchtrittsbereich, wobei das Förderelement insbesondere eine Förderschnecke (114) umfasst.

5. Ziehkopf nach einem der Ansprüche 1 bis 4, wobei das vordere Anschlusselement (104, 104') mit einem der hinteren Anschlusselemente über ein oder mehrere Verbindungselemente (105, 105') verbunden ist, wobei sich das Verbindungselement (105, 105') oder die Verbindungselemente (105, 105') in, neben, unter und/oder über dem Durchtrittsbereich (109) erstrecken.

6. Ziehkopf nach einem der Ansprüche 1 bis 5, mit einem weiteren hinteren Anschlusselement (106") zu einer derartigen Kopplung mit einem zu verlegenden Rohr oder Kabel (107), dass das Rohr oder Kabel (107) innerhalb eines durch das Pilotbohrloch (103) definierten Bereichs zu liegen kommt, insbesondere koaxial zu einer Mittelachse des Pilotbohrlochs (103).

7. Ziehkopf nach einem der Ansprüche 1 bis 6, mit einem Zugkraftsensor (112) zur Erfassung einer Zugkraft, die vom Ziehkopf beim Verlegen auf eines der zu verlegenden Rohre oder Kabel (109) aufgebracht wird.

8. Ziehkopf nach einem der Ansprüche 1 bis 7, wobei wenigstens ein hinteres Anschlusselement (106') mit einem Zugunterstützungselement (115) versehen ist, wobei das Zugunterstützungselement (115) für eine verteilte Aufbringung von Zugkraft entlang einer Längsrichtung des mit dem Anschlusselement (106') gekoppelten Rohres oder Kabels (107) ausgestaltet ist,
wobei das hintere Anschlusselement (106') mit dem Zugunterstützungselement insbesondere für eine Kopplung mit einem Rohr (107) ausgestaltet ist, wobei das Zugunterstützungselement (115) für ein Sich-Erstrecken innerhalb des gekoppelten Rohres (107) und einen jeweiligen Reibschluss durch mehrere Reibkörper (116) an mehreren, in Längsrichtung des Rohres (107) verteilten Stellen an einer Innenseite des Rohres (107) ausgestaltet ist.

9. Ziehkopf nach einem der Ansprüche 1 bis 8, mit wenigstens einer Lagesteuereinrichtung (113), die im Betrieb für eine Einwirkung auf eine Rotationslage des Ziehkopfes oder wenigstens eines hinteren Anschlusselements (106) um eine Mittelachse des Pilotbohrlochs (103) ausgestaltet ist.

10. Ziehkopf nach einem der Ansprüche 1 bis 9, wobei die hinteren Anschlusselemente (106, 106', 106") zur Kopplung mit Rohren und/oder Kabeln (107) vorgesehen sind, derart dass deren Gesamtquerschnitt in einem Bereich von 80% bis 120% eines Querschnitts des Pilotbohrlochs (103) oder des durch den Ziehkopf aufgeweiteten Pilotbohrlochs (103) liegt.

11. System zur parallelen grabenlosen Rohr- und/oder Kabelverlegung in einem Boden, mit,
einem Ziehkopf nach einem der Ansprüche 1 bis 10,
einer Bohreinrichtung zur Erstellung eines Pilotbohrlochs (103) im Boden und
einer Zugeinrichtung (101) zur Kopplung mit dem Ziehkopf und zum Ziehen des Ziehkopfs mit daran angekoppelten Rohren und/oder Kabeln (107) durch das Pilotbohrloch (103).

12. Verfahren zur parallelen grabenlosen Rohr- und/oder Kabelverlegung in einem Boden, mit den Schritten:
Erstellen (120) eines Pilotbohrlochs (103) im Boden (102),
Koppeln (121) eines Ziehkopfes mit einer sich durch das Pilotbohrloch (103) erstreckenden Zugeinrichtung (101),
Koppeln (122) des Ziehkopfes mit den zu verlegenden Rohren und/oder Kabeln (107) und
Ziehen (123) des Ziehkopfes mit daran angekoppelten Rohren und/oder Kabeln (107) durch das Pilotbohrloch (103) mittels der Zugeinrichtung (101),
wobei beim Ziehen des Ziehkopfes durch den Ziehkopf und/oder die angekoppelten Rohre und/oder Kabel (109) neben dem Pilotbohrloch (103) befindliches Bodenmaterial durch einen Durchtrittsbereich (109) des Ziehkopfes hindurch in einen Bereich zwischen den angekoppelten Rohren und/oder Kabeln (109) versetzt wird.

13. Verfahren nach Anspruch 12,
wobei das Erstellen des Pilotbohrlochs umfasst:
Erstellen (50) von einer oder mehreren Multifunktionsbohrungen (3), die sich jeweils von der Oberfläche (20) bis zu einem Schnittpunkt mit einer zur Verlegung des Kabels (1) oder Rohres (12) vorgesehenen Bohrlinie (4) und darüber hinaus erstrecken, und
Durchführen (52) einer gerichteten Horizontalbohrung (2) entlang der Bohrlinie (4) unter Nutzung von unter Druck zugeführter Bohrflüssigkeit (11),
wobei bei einem entsprechenden Bohrfortschritt Bohrflüssigkeit (11) aus dem durch die Horizontalbohrung (2) erstellten Bohrloch durch wenigstens eine der Multifunktionsbohrungen (3) hindurch abgefördert wird.

14. Verfahren zur parallelen grabenlosen Rohr- und/oder Kabelverlegung in einem Boden, mit den Schritten:
Koppeln (140) eines Ziehkopfes mit einer Bohreinrichtung (130) zur Erstellung eines Pilotbohrlochs (103) im Boden,
Koppeln (141) des Ziehkopfes mit den zu verlegenden Rohren und/oder Kabeln (107) und
Vortreiben (142) des Ziehkopfes mit daran angekoppelten Rohren und/oder Kabeln (107) durch das Pilotbohrloch (103) mittels der Bohreinrichtung (130) beim Bohren des Pilotbohrlochs (103),
wobei beim Vortreiben (142) des Ziehkopfes durch den Ziehkopf und/oder die angekoppelten Rohre und/oder Kabel (109) neben dem Pilotbohrloch (103) befindliches Bodenmaterial durch einen Durchtrittsbereich (109) des Ziehkopfes hindurch in einen Bereich zwischen den angekoppelten Rohren und/oder Kabeln (109) versetzt wird.

## Claims

1. Pulling head for parallel trenchless pipe and/or cable laying in the ground (102), comprising
a front connection element (104, 140') for coupling the pulling head to a pulling device (101) in a pilot drill hole (103) or to a drilling device (130) for a pilot drill hole (103) and
at least two rear connection elements (106, 106', 106") for coupling the pulling head to a pipe or cable (107) which is intended to be laid, respectively,
wherein at least one of the rear connection elements (106, 106') is arranged offset with respect to the front connection element (104, 104') in a parallel manner transversely relative to a pulling direction,
wherein the pulling head has between at least one rear connection element (106, 106') and the front connection element (104, 104') a passage region (109) which is permeable to ground material which is displaced during laying from a region beside the pilot drill hole (103) between the rear connection elements (106, 106', 106").

2. Pulling head according to claim 1, wherein the front connection element (104, 104') is configured for expansion of the pilot drill hole (103).

3. Pulling head according to claim 1 or claim 2, comprising at least one release and/or guiding element (111) which is configured for releasing ground material which is intended to be displaced and/or guiding ground material during the displacement.

4. Pulling head according to one of claims 1 to 3, comprising a conveying element (114) for conveying ground material through the passage region, wherein the conveying element in particular comprises a screw conveyor (114).

5. Pulling head according to one of claims 1 to 4, wherein the front connection element (104, 104') is connected to one of the rear connection elements by one or more connection elements (105, 105'), wherein the connection element (105, 105') or the connection elements (105, 105') extend(s) in, beside, below and/or over the passage region.

6. Pulling head according to one of claims 1 to 5, comprising a further rear connection element (106") for coupling to a pipe or cable (107) which is intended to be laid such that the pipe or cable (107) comes to rest inside a region defined by the pilot drill hole (103), in particular coaxially with respect to a centre axis of the pilot drill hole (103).

7. Pulling head according to one of claims 1 to 6, comprising a pulling force sensor (112) for detecting a pulling force, which is applied by the pulling head during laying to one of the pipes or cables (109) which is intended to be laid.

8. Pulling head according to one of claims 1 to 7, wherein at least one rear connection element (106') is provided with a pulling support element (115), wherein the pulling support element (115) is configured for a distributed application of tensile force in a longitudinal direction of the pipe or cable (107) which is coupled to the connection element (106'),
wherein the rear connection element (106') is configured with the pulling support element for coupling to a pipe (107), wherein the pulling support element (115) is configured to extend within the coupled pipe (107) and for a respective frictional engagement by means of a plurality of friction members (116) at a plurality of locations which are distributed in the longitudinal direction of the pipe (107) at an inner side of the pipe (107).

9. Pulling head according to one of claims 1 to 8, comprising at least one position control device (113) which during operation is configured for action on a rotation position of the pulling head or at least one rear connection element (106) about a centre axis of the pilot drill hole (103).

10. Pulling head according to one of claims 1 to 9, wherein the rear connection elements (106, 106', 106") are provided for coupling to pipes and/or cables (107) in such a manner that the entire cross-section thereof is in a range from 80% to 120% of a cross-section of the pilot drill bole (103) or the pilot drill hole (103) which is expanded by the pulling head.

11. System for parallel trenchless pipe and/or cable laying in the ground, comprising:
a pulling head according to one of claims 1 to 10,
a drilling device for producing a pilot drill hole (103) in the ground and
a pulling device (101) for coupling to the pulling head and for pulling the pulling head with pipes and/or cables (107) coupled thereto through the pilot drill hole (103).

12. Method for parallel trenchless laying of a cable and/or pipe in the ground, comprising the steps:
producing (120) a pilot drill hole (103) in the ground (102),
coupling (121) a pulling head to a pulling device (101) which extends through the pilot drill hole (103),
coupling (122) the pulling head to the pipes and/or cables (107) which are intended to be laid and
pulling (123) the pulling head with pipes and/or cables (107) coupled thereto through the pilot drill hole (103) by means of the pulling device (101),
wherein, when the pulling head is pulled, ground material which is located beside the pilot drill hole (103) is displaced by the pulling head and/or the coupled pipes and/or cables (109) through a passage region (109) of the pulling head into a region between the coupled pipes and/or cables (109).

13. Method according to claim 13,
wherein producing of the pilot drill hole comprises:
producing (50) one of more multi-function holes (3) which each extend from the surface (20) as far as an intersection with a drilling line (4) which is provided for laying the cable (1) or pipe (12), and therebeyond, and
carrying out (52) a directed horizontal drilling (2) along the drilling line (4) using drilling fluid (11) which is supplied under pressure,
wherein, with corresponding drilling progress, drilling fluid (11) is discharged from the drill hole produced by the horizontal drilling (2) through at least one of the multi-function holes (3).

14. Method for parallel trenchless laying of a cable and/or pipe in the ground, comprising the steps:
coupling (140) a pulling head with a drilling device (130) in order to produce a pilot drill hole (103) in the ground,
coupling (141) the pulling head with the pipes and/or cables (107) which are intended to be laid, and
advancing (142) the pulling head with pipes and/or cables (107) coupled thereto through the pilot drill hole (103) by means of the drilling device (130) when the pilot drill hole (103) is drilled,
wherein, when the pulling head is advanced (142), by the pulling head and/or the coupled pipes and/or cables (109), ground material located beside the pilot drill hole (103) is displaced through a passage region (109) of the pulling head into a region between the coupled pipes and/or cables (109).

## Revendications

1. Tête d'étirage servant à la pose parallèle de tuyaux et/ou de câbles sans excavation dans un sol (102), avec :
un élément de raccordement avant (104, 104') servant à coupler la tête d'étirage à un système de traction (101) dans un trou de forage pilote (103) ou à un système de forage (130) pour un trou de forage pilote (103), et
au moins deux éléments de raccordement arrière (106, 106', 106'') servant à coupler respectivement la tête d'étirage à un tuyau ou un câble (107) à poser,
dans laquelle au moins un des éléments de raccordement arrière (106, 106') est disposé de manière décalée parallèlement transversalement à une direction de traction par rapport à l'élément de raccordement avant (104, 104'),
dans laquelle la tête d'étirage présente, entre au moins un élément de raccordement arrière (106, 106') et l'élément de raccordement avant (104, 104'), une zone de passage (109), qui laisse passer un matériau de sol décalé lors de la pose depuis une zone à côté du trou de forage pilote (103) entre les éléments de raccordement arrière (106, 106', 106'').

2. Tête d'étirage selon la revendication 1, dans laquelle l'élément de raccordement avant (104, 104') est configuré pour un élargissement du trou de forage pilote (103) .

3. Tête d'étirage selon l'une quelconque des revendications 1 ou 2, avec au moins un élément de libération et/ou de guidage (111), qui est configuré pour libérer du matériau de sol à refouler et/ou pour guider du matériau de sol lors du refoulement.

4. Tête d'étirage selon l'une quelconque des revendications 1 à 3, avec au moins un élément de transport (114) servant au transport de matériau de sol à travers la zone de passage, dans laquelle l'élément de transport comprend en particulier une vis sans fin de transport (114).

5. Tête d'étirage selon l'une quelconque des revendications 1 à 4, dans laquelle l'élément de raccordement avant (104, 104') est relié à un des éléments de raccordement arrière par l'intermédiaire d'un ou de plusieurs éléments de liaison (105, 105'), dans laquelle l'élément de liaison (105, 105') ou les éléments de liaison (105, 105') s'étendent dans, à côté, sous et/ou par-dessus la zone de passage (109).

6. Tête d'étirage selon l'une quelconque des revendications 1 à 5, avec un autre élément de raccordement arrière (106'') servant à un couplage tel à un tuyau ou un câble (107) à poser que le tuyau ou câble (107) vient se placer à l'intérieur d'une zone définie par le trou de forage pilote (103), en particulier de manière coaxiale à un axe central du trou de forage pilote (103).

7. Tête d'étirage selon l'une quelconque des revendications 1 à 6, avec un capteur de force de traction (112) servant à détecter une force de traction, qui est appliquée par la tête d'étirage lors de la pose sur un des tuyaux ou câbles (109) à poser.

8. Tête d'étirage selon l'une quelconque des revendications 1 à 7, dans laquelle au moins un élément de raccordement arrière (106') est pourvu d'un élément d'aide à la traction (115), dans laquelle l'élément d'aide à la traction (115) est configuré pour appliquer de manière répartie une force de traction le long d'un sens longitudinal du tuyau ou câble (107) couplé à l'élément de raccordement (106'),
dans laquelle l'élément de raccordement arrière (106') est configuré avec l'élément d'aide à la traction en particulier pour un couplage à un tuyau (107), dans laquelle l'élément d'aide à la traction (115) est configuré pour s'étendre à l'intérieur du tuyau (107) couplé et pour une liaison par friction respective par plusieurs corps de friction (116) au niveau de plusieurs emplacements répartis dans le sens longitudinal du tuyau (107) au niveau d'un côté intérieur du tuyau (107).

9. Tête d'étirage selon l'une quelconque des revendications 1 à 8, avec au moins un système de commande position (113), qui est configuré en fonctionnement pour agir sur une position de rotation de la tête d'étirage ou au moins d'un élément de raccordement arrière (106) autour d'un axe central du trou de forage pilote (103).

10. Tête d'étirage selon l'une quelconque des revendications 1 à 9, dans laquelle les éléments de raccordement arrière (106, 106', 106'') sont prévus pour être couplés à des tuyaux et/ou câbles (107) de telle manière que leur section transversale totale se situe dans une plage de 80 % à 120 % d'une section transversale du trou de forage pilote (103) ou du trou de forage pilote (103) élargi par la tête d'étirage.

11. Système servant à la pose parallèle de tuyaux et/ou de câbles sans excavation dans un sol, avec
une tête d'étirage selon l'une quelconque des revendications 1 à 10,
un système de forage servant à créer un trou de forage pilote (103) dans le sol et
un système de traction (101) destiné à être couplé à la tête d'étirage et servant à tirer la tête d'étirage avec des tuyaux et/ou câbles (107) accouplés à celle-ci à travers le trou de forage pilote (103).

12. Procédé servant à la pose parallèle de tuyaux et/ou de câbles sans excavation dans un sol, avec les étapes :
de création (120) d'un trou de forage pilote (103) dans le sol (102),
de couplage (121) d'une tête d'étirage à un système de traction (101) s'étendant à travers le trou de forage pilote (103),
de couplage (122) de la tête d'étirage aux tuyaux et/ou câbles (107) à poser, et
de traction (123) de la tête d'étirage avec des tuyaux et/ou câbles (107) accouplés à celle-ci à travers le trou de forage pilote (103) au moyen du système de traction (101),
dans lequel lors de la traction de la tête d'étirage, du matériau de sol se trouvant à côté du trou de forage pilote (103) est décalé à travers une zone de passage (109) de la tête d'étirage de part en part dans une zone entre les tuyaux et/ou câbles (109) accouplés par la tête d'étirage et/ou les tuyaux et/ou câbles (109) accouplés.

13. Procédé selon la revendication 12,
dans lequel la création du trou de forage pilote comprend :
la création (50) d'un ou de plusieurs alésages multifonctionnels (3), qui s'étendent respectivement depuis la surface (20) jusqu'à un point d'intersection avec une ligne de forage (4) prévue pour la pose du câble (1) ou du tuyau (12) et au-delà,
et
la réalisation (52) d'un alésage horizontal (2) dirigé le long de la ligne de forage (4) en utilisant du liquide de forage (11) amené sous pression,
dans lequel lors d'une progression de forage correspondante, du liquide de forage (11) est évacué hors du trou de forage créé par l'alésage horizontal (2) par au moins un des alésages multifonctionnels (3) de part en part.

14. Procédé servant à la pose parallèle de tuyaux et/ou de câbles sans excavation dans un sol, avec les étapes :
de couplage (140) d'une tête d'étirage à un système de forage (130) pour créer un trou de forage pilote (103) dans le sol,
de couplage (141) de la tête d'étirage aux tuyaux et/ou câbles (107) à poser, et
de propulsion (142) de la tête d'étirage avec des tuyaux et/ou câbles (107) accouplés à celle-ci à travers le trou de forage pilote (103) au moyen du système de forage (130) lors du forage du trou de forage pilote (103),
dans lequel lors de la propulsion (142) de la tête d'étirage, du matériau de sol se trouvant à côté du trou de forage pilote (103) est décalé à travers la zone de passage (109) de la tête d'étirage de part en part dans une zone entre les tuyaux et/ou câbles (109) accouplés par la tête d'étirage et/ou les tuyaux et/ou câbles (109) accouplés.
